# EUROPEAN PATENT SPECIFICATION

(11) **EP 1 245 072 B1**
(45) Date of publication and mention of the grant of the patent: **24.11.2004**
(21) Application number: 01902627.7
(22) Date of filing: 03.01.2001
(51) Int. Cl.: H02K 15/085

(54) **NUMERICALLY CONTROLLED AUTOMATIC WINDING MACHINE FOR WINDING AN ELECTRIC WIRE ON CLOSED SLOT STATORS**
NUMERISCH GESTEUERTE AUTOMATISCHE WICKELMASCHINE FÜR DAS WICKELN EINER ELEKTRISCHEN LEITUNG AUF STATOREN MIT GESCHLOSSENEN NUTEN
MACHINE A ENROULER AUTOMATIQUE A COMMANDE NUMERIQUE DESTINEE A ENROULER UN CABLE ELECTRIQUE SUR DES STATORS A FENTES FERMEES

(30) Priority: 05.01.2000 IT MO000001
(43) Date of publication of application: 02.10.2002
(73) Proprietor: Bertocchi, Daniele, 44042 Cento (IT)
(72) Inventor: BERTOCCHI, Daniele, I-44042 Cento (IT); GALLERANI, Roberto, I-40014 Bevilacqua di Crevalcore (IT)
(74) Representative: Fiammenghi-Domenighetti, Delfina
(86) International application number: PCT/IT2001/000001
(87) International publication number: WO 2001/050580

(56) References cited:
- EP-A- 0 889 491
- US-A- 4 157 165
- US-A- 4 538 770

## Description

The present invention relates to a system suited to automatically perform the complete winding of coils directly on stators with closed slots (inwardly directed pole shoes).

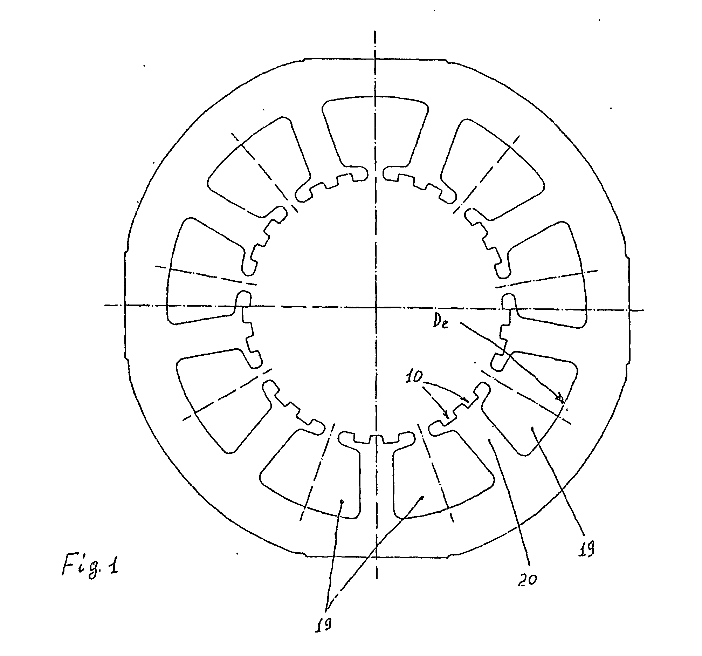

The term "closed slot stator" is used herein for a stator in which the slots, inside which the windings making up the coils are arranged, are disposed internally instead of on the outer periphery (see Fig. 1 which illustrates a stator core lamination for a "closed slot stator", wherein numeral 19 denotes the slots containing the windings).

Various types of winding machines (coil winders) suited to wind up electrically conductive wires around a ferromagnetic core in an "open slot stator" are well known in the art. A winding machine suited to automatically and mechanically perform the winding operation on "closed slot stators", is disclosed in EP-A-0 889 491.

EP-A-0 889 491 discloses (in Figs. 6 and 7) a winding machine, which includes a driving device, for moving a wire dispensing needle along three orthogonal directions (X, Y, Z). The needle has a cylindrical shape and may be rotated from a vertical to a horizontal position, using a crank driver and a crank. When the needle is in the vertical position, the wire is wound around a terminal T of the stator. The terminal T is used to fix the wire, in order to be able to start the winding operation. The needle is not able to perform a "training motion" around a vertical axis. Furthermore, there are no guide means on the stator, for guiding the wire from one pole to the next. A wire tensioning device using friction is not disclosed.

On the other hand, the manual winding of the wire, in case of closed slots, besides being wearisome and requiring specialised staff, also takes much time (and is therefore expensive), and results in turns which are overlapped and crossed, that is, randomly disposed, in such a way that for the same number of turns, the length of the wire - expressed in meters -, and therefore its electric resistance, is not the same for all coils; the latter circumstance leading to anomalies in operation especially in applications concerning analogue motors.

Moreover, the efficiency of an electric motor depends on several factors, like the length of the electric conductor (conductive wire) for a constant value of the volume occupied by the coil turns.

An object of the present invention is to provide users with a machine allowing to automatically perform the complete winding on closed slot stators, without being forced to interrupt the continuity of the conductive wire.

A further object of the present invention is to perform the winding in such a way that the turns are regularly arranged, wherein each turn is adjacent to the other, and the layers are regularly (uniformly) overlapped (in quincunx; staggered) in order to provide inside a given space the maximum number of turns and consequently the maximum length of the electrically conductive wire.

Still another object of the invention is to ensure that the coils are all identical, both with regard to the number of turns and length of the conductive wire, and to the value of electric resistance.

A further not less important object of the present invention is to obtain a perfect winding operation, which may be performed at low cost, repeatedly and always in the same manner, and which is easy, quick and does not require specialised staff.

The present invention attains the above objects by a system suited to uniformly wind electrically conductive wires (8) directly on closed slot stators (14), the stator (14) having a stator pack formed by ferromagnetic core laminations having a special contour, special head portions (12,13) which complete the stator (14) and which allow to effect the winding with turns disposed regularly in adjacent positions, and overlapping layers arranged in a staggered manner, without crossings, the head portions (12, 13) having an anular configuration and hooking means (23); the system comprising a digitally controlled winding machine comprising a special needle (5) suited to feed and dispense the electrically conductive wire (8) used to realise the winding; a plurality of electronically controlled units (A-B-C-Y-E-X-Z-H); a mechanical assembly controlled by the first of these units, (A), which moves the needle (5) according to a vertical reciprocating motion (F4) which is combined with a horizontal oscillatory or "training" motion (F5); a mechanical assembly, controlled by the second of said units, B, which moves the stator (14) according to a rectilinear reciprocating motion, in order to centre the passage of the needle (5) between the poles (20); a mechanical assembly, controlled by a third of said units, C, which is synchronised with respect to the second unit B, in order to increase or decrease the oscillation or training amplitude of the needle (5); a mechanical assembly, controlled by a fourth unit, Y, for translating the stator horizontally along the axis Y in order to perform the stratification (17) of the turns; a mechanical assembly, controlled by a fifth unit, E, which rotates the stator (14), in order to pass from the pole shoe, on which the winding operation has been completed, to the next pole shoe, on which the winding is continued without interruption of the wire continuity; a mechanical assembly, controlled by a sixth unit, X, which performs the longitudinal translation in the X direction of a needle supporting head; a mechanical assembly, controlled by a seventh unit, Z, which realises the vertical translation in Z direction of the needle supporting head; a mechanical assembly, controlled by an eighth unit H, which actuates a fork (42) acting on the wire (8) during its passage from the outside to the inside of the stator slots (19), and vice versa, and which is suited to insert the conductive wire (8) between the hooking means (23), along the path leading from one pole shoe to be wound, to the next pole shoe; a tensioning device (7; 48, 49, 50) of the electrically conductive wire (8); a service plate (34), on which an indexed pallet (35) is loaded for each stator to be wound at the same time; a locking device (58), allowing to lock/unlock a plurality of stator support pallets (35) on respective mandrels (3); an automatic wire anchoring device, for anchoring the wire (8) at the beginning and end of the winding operation; an automatic wire cutting device, for automatically cutting the wire (8) at the end of the winding operation; an automatic loading/unloading device, including several stations, for said service plate (34) supporting said pallets (35); electromechanical means, suited for the functions to be performed by the various moving members; electronic means, suited for programming the various units; a pressure lubrication plant; and safety means for protection against accidents.

Further advantages of the invention will result more clearly from the description of a preferred but non-limitative embodiment, of the winding system which is shown for illustrative but non-limitative purposes in the annexed drawings, wherein:
Fig. 1 shows, in a plan view, one of the various ferromagnetic stator core laminations of the "closed slot" kind making up the laminar pack of the stator whereon the winding operation is to be performed;
Fig. 2 is a perspective view of the whole assembly forming the winding machine of the present invention;
Fig. 3 shows in more detail the device used for tensioning the conductive wire;

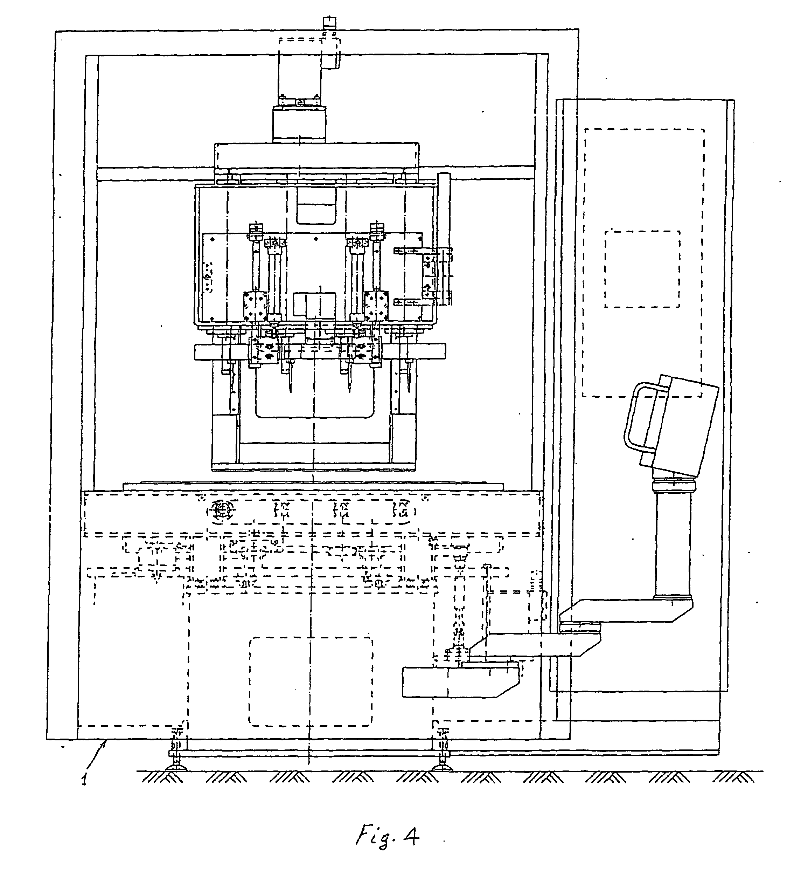

Fig. 4 is a front view of the winding machine;

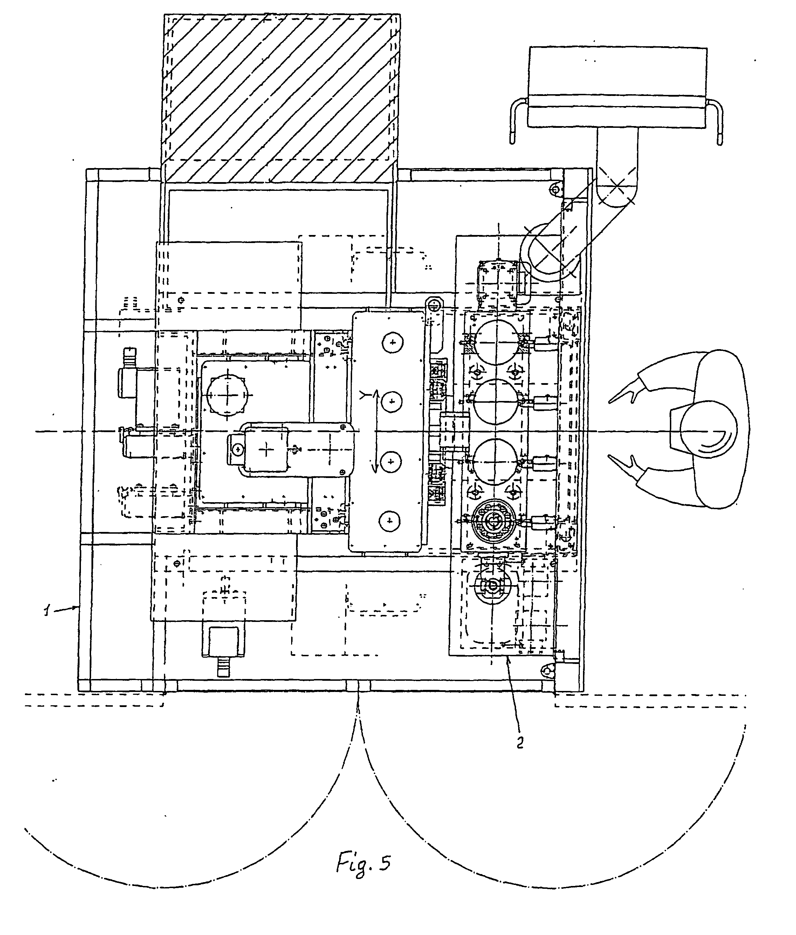

Fig. 5 is a plan view of the winding machine;
Fig. 6 is a side view of the winding machine;
Fig. 7 schematically shows the movements of the needle dispensing the conductive wire;
Fig. 8 shows according to a perspective view, the upper head portion of the stator, forming part of the winding system;
Fig. 9 shows, according to a perspective view, the lower head portion which completes the stator;
Fig. 10 shows, according to a perspective view, the assembly including the stator, the upper head portion, and the lower head portion, all forming part of the winding system;
Fig. 11 shows, in a partially sectional perspective view, the assembly formed by the stator and its head portions, illustrated in Fig. 10;
Fig. 12 schematically shows how a complete winding of the stator includes three terns of coils which are angularly shifted by 120° degrees from each other;
Figs. 13, 14 and 15 respectively illustrate the path of the electrically conductive wire giving rise to the first, second, and third group of terns of regular (that is, uniform) windings, making up the complete winding provided on the stator, as shown schematically in Fig. 12;
Fig. 16 is a plan view of the upper head portion, which is shown in perspective view in Fig. 8, illustrating the appearance of the stratification of the conductive wire in the various coils making up the complete winding;
Fig. 17 is a cross section taken in the plane A-A of Fig. 16;
Figs. 18-23 illustrate, according to different views and/or sectional views, the needle used to dispense the electrically conductive wire or cable; and more particularly:
   Fig. 18 is an end view of the needle, in the direction indicated by the arrow F3;

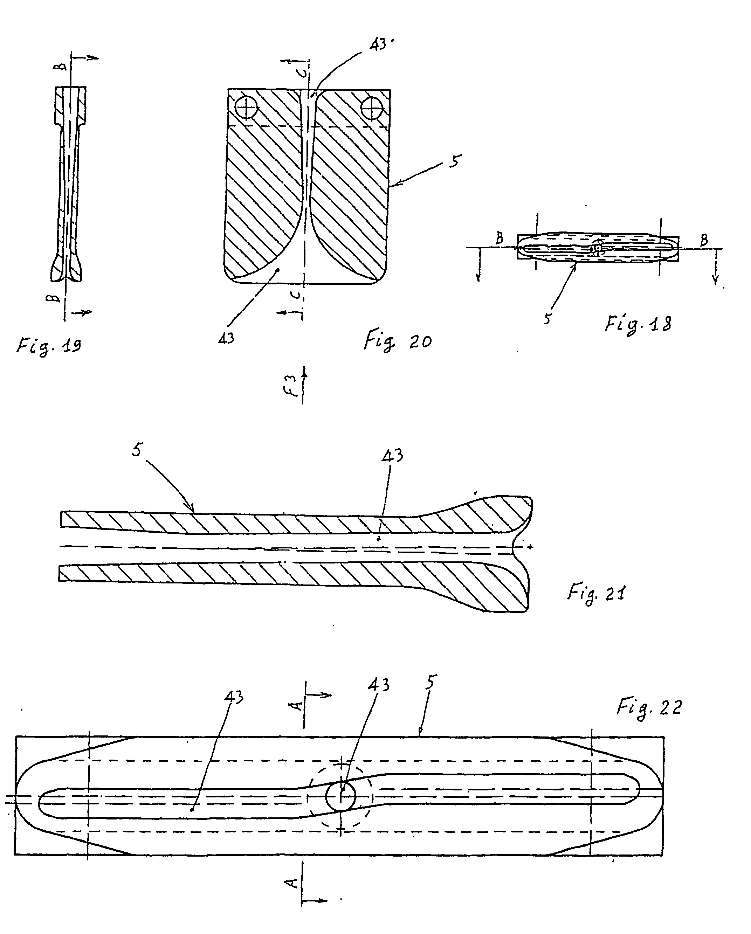

   Fig. 19 is a cross-section taken along the line C-C of Fig. 20;
   Fig. 20 is a cross section along the line B-B of Figs. 18 and 19;
   Fig. 21 and Fig. 22 are enlarged views of Figs. 19 and 18 respectively;

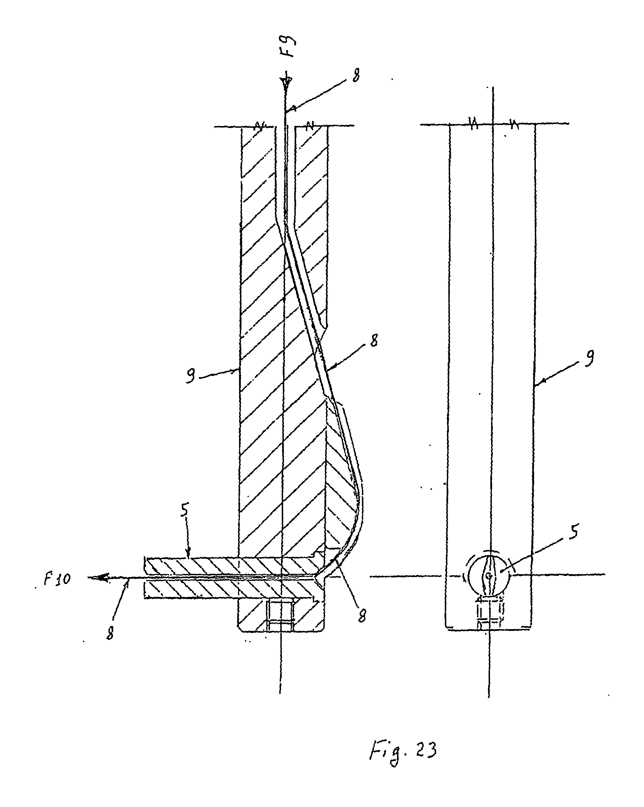

   Fig. 23 shows, according to two orthogonal views - one of them being a cross-sectional view - the configuration of the needle at the end where the conductive wire comes out of the needle;

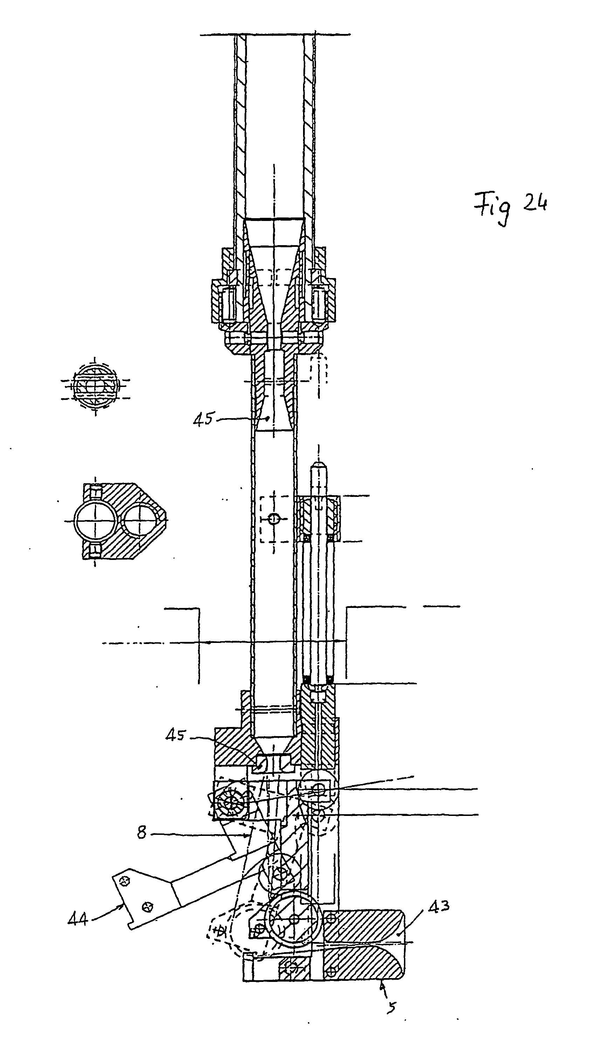

Fig. 24 shows, in cross section, the needle inner structure and how it is inserted on the needle supporting mandrel;

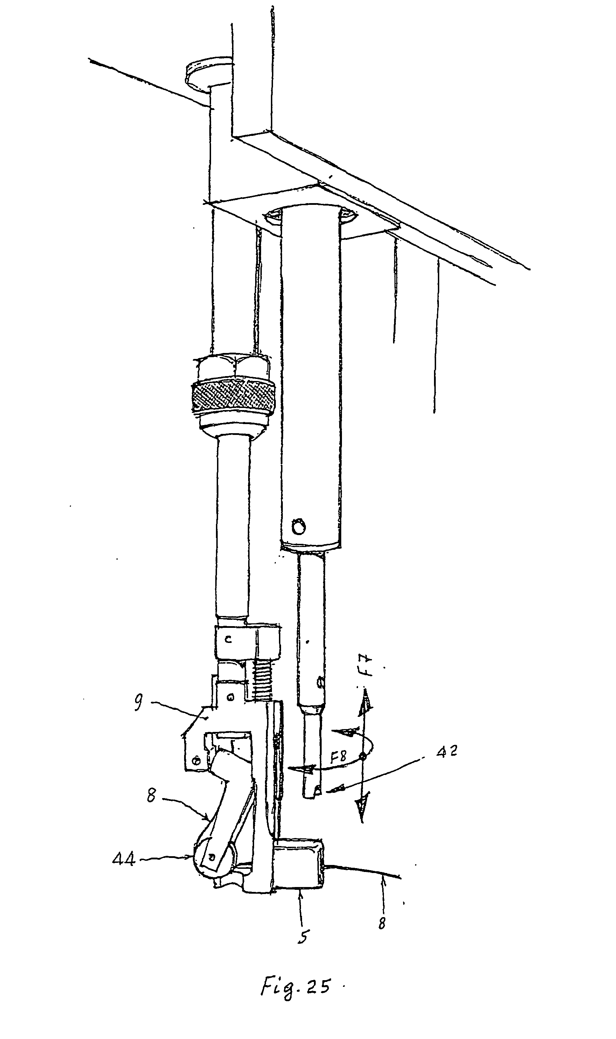

Fig. 25 schematically shows which movements the fork is able to carry out, said fork being apt to guide the electrically conductive wire during its passage from the inside to the outside of the stator slots and vice versa;

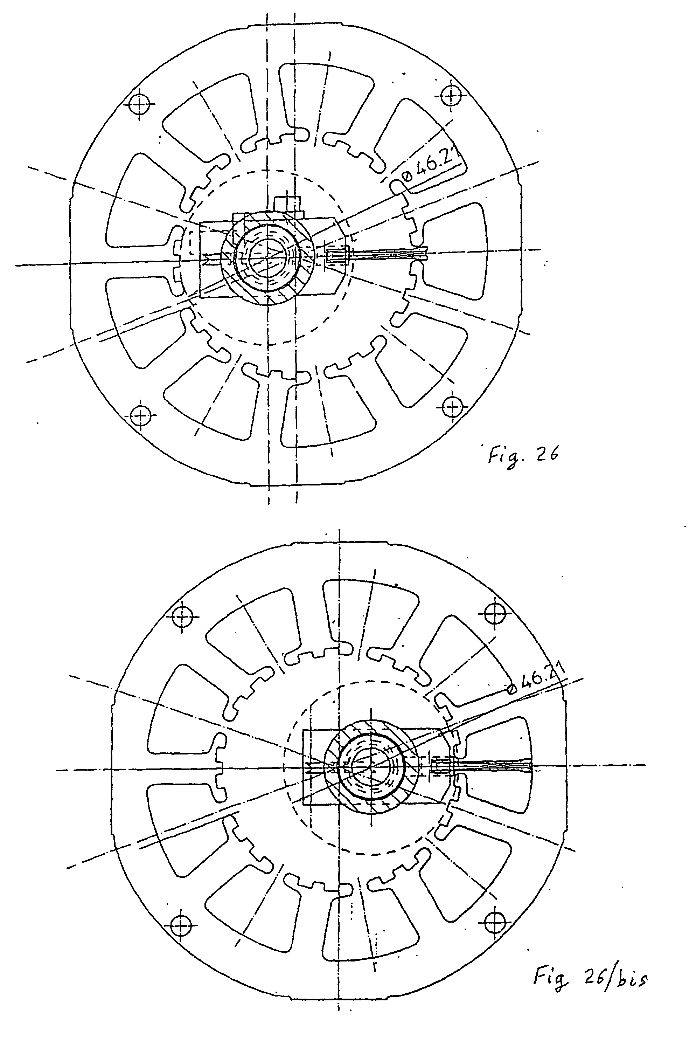

Figs. 26 and 26/bis show two possible positions, inside the stator, of the needle used to dispense the conductive wire;

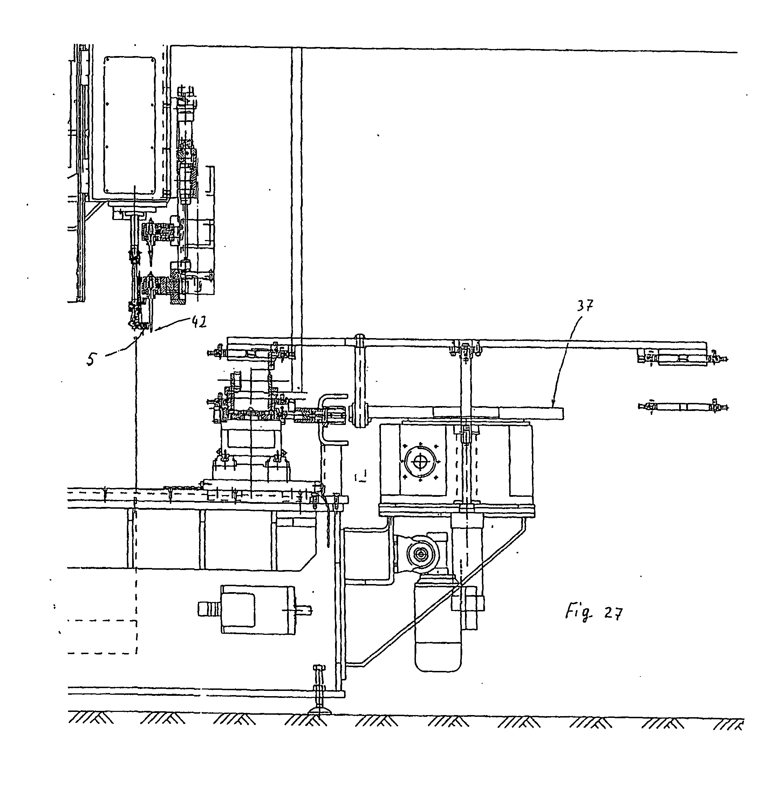

Figs. 27 - 28 illustrate, according to two orthogonal views, a mechanical hand and the associated turntable, which may be optionally actuated to automatically replace the pallet support plates, which, in the illustrated embodiment, serve for holding 4 stators;

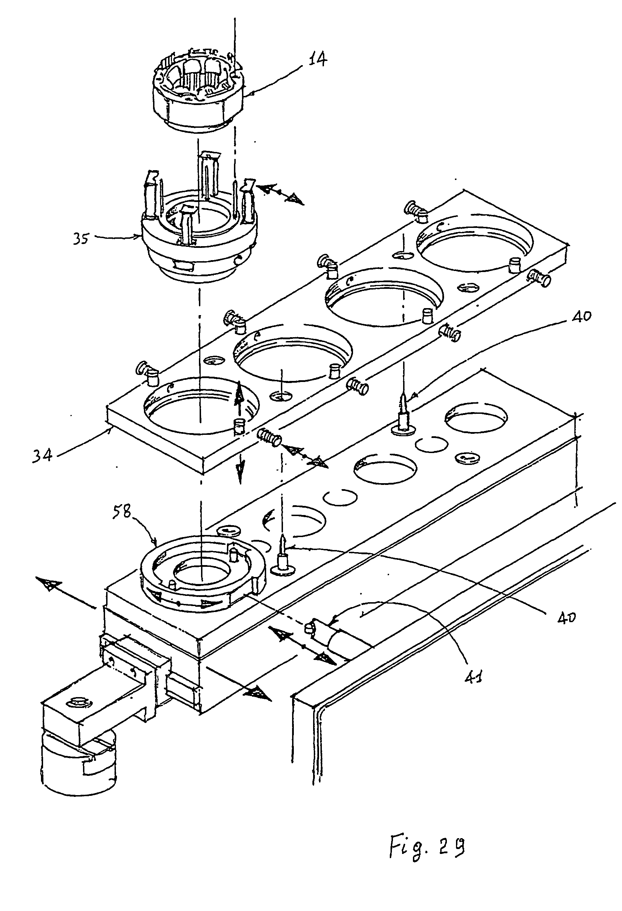

Fig. 29 illustrates in detail the pallets and pallets support plate;
Fig. 30 schematically shows the mechanical assemblies used to transmit a rectilinear reciprocating motion to the stator, and to increase or decrease the amplitude of the needle oscillation or "training motion";

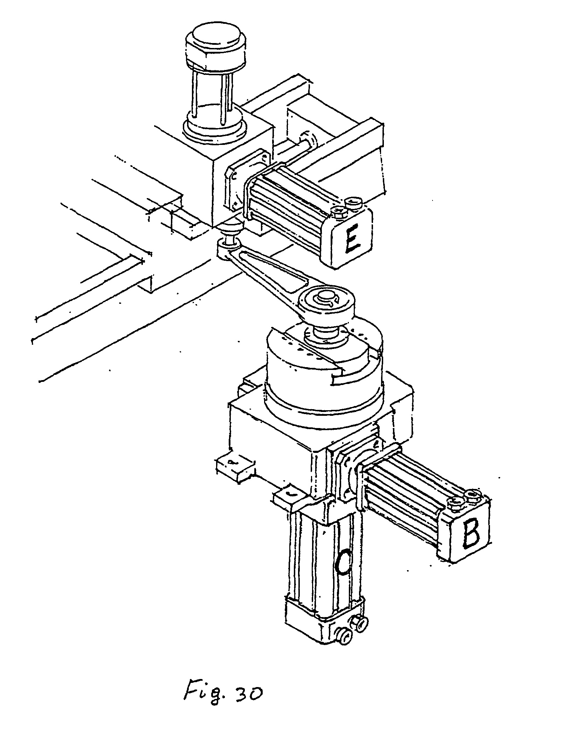

Figs. 31, 32 and 33, schematically show an alternative solution according to which the orthogonal displacements, normally carried out by the stator support carriage, by means of the axes X-Y, are now obtained by the displacement of the needle itself;

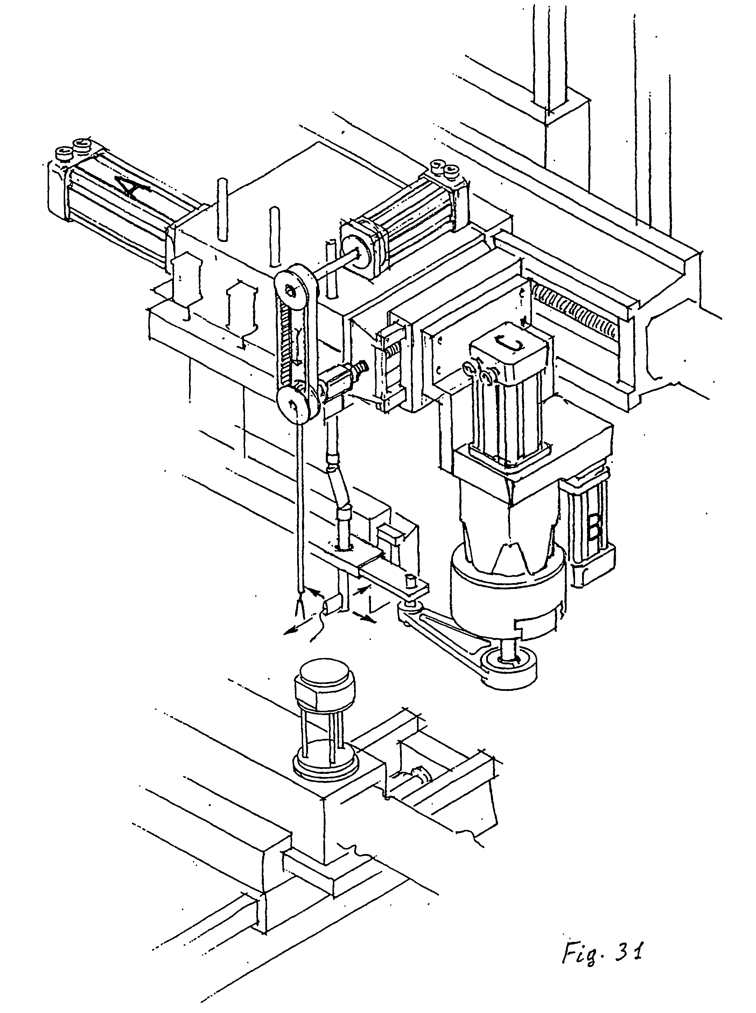

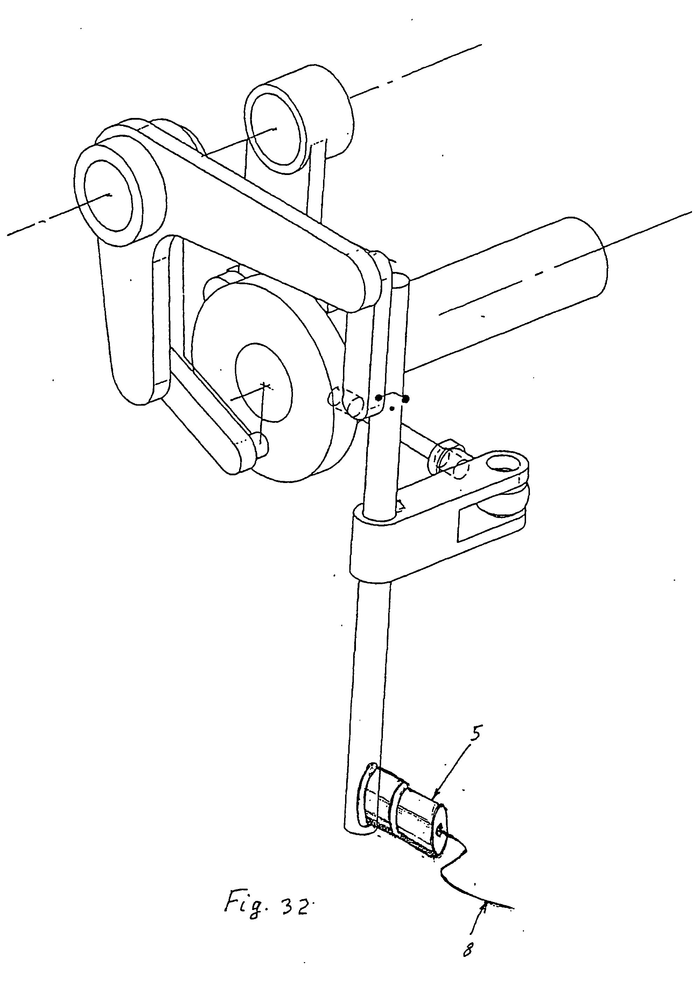

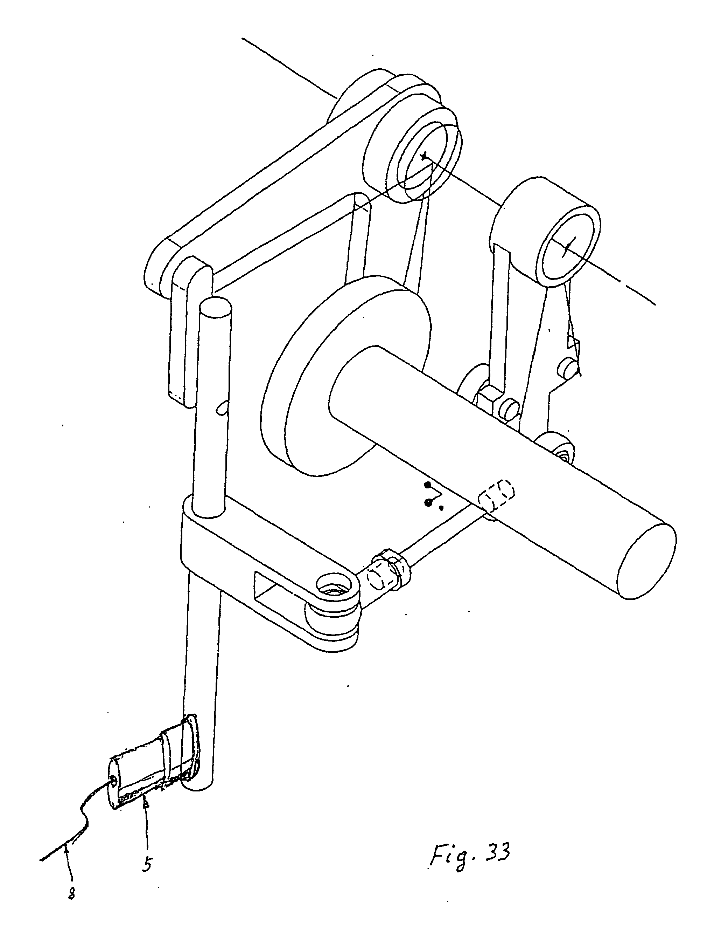

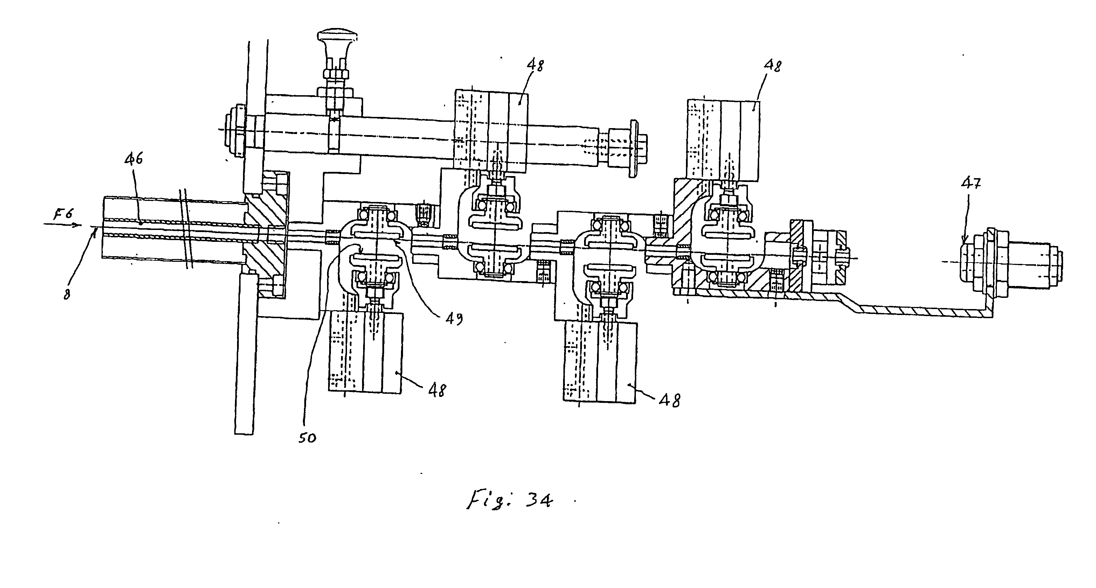

Fig. 34 illustrates both in detail and in cross-section, the modular elements used to maintain the electrically conductive wire in a tensioned condition;

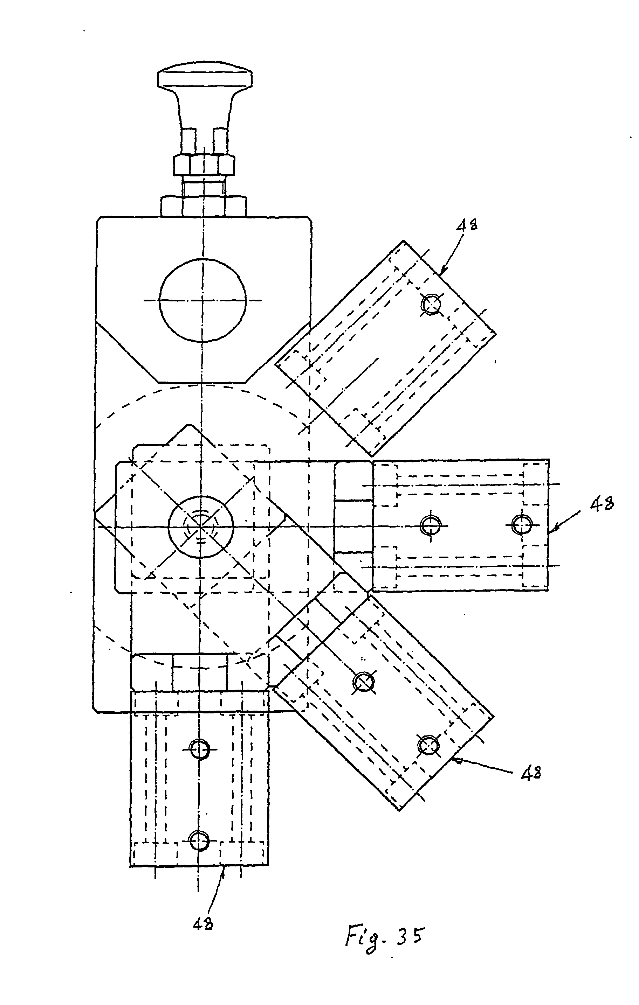

Fig. 35 is an end view, in the direction of the arrow F6, of the tensioning device of Fig. 34, showing how the tensioning elements are arranged according to different inclinations.

In the various figures, the same alphanumeric reference characters denote the same elements or parts.

The winding system, including the stator and the machine shown in the various annexed drawings is a system which performs simultaneously the winding operation of four stators.

In some figures, some details have purposely been omitted in order to render more clearly understandable the features to be emphasised, this has been done to the effect of making the description clearer and more concise; moreover, the annexed drawings neither include conventional structural elements, nor mechanical assemblies which are known and/or evident to a skilled person.

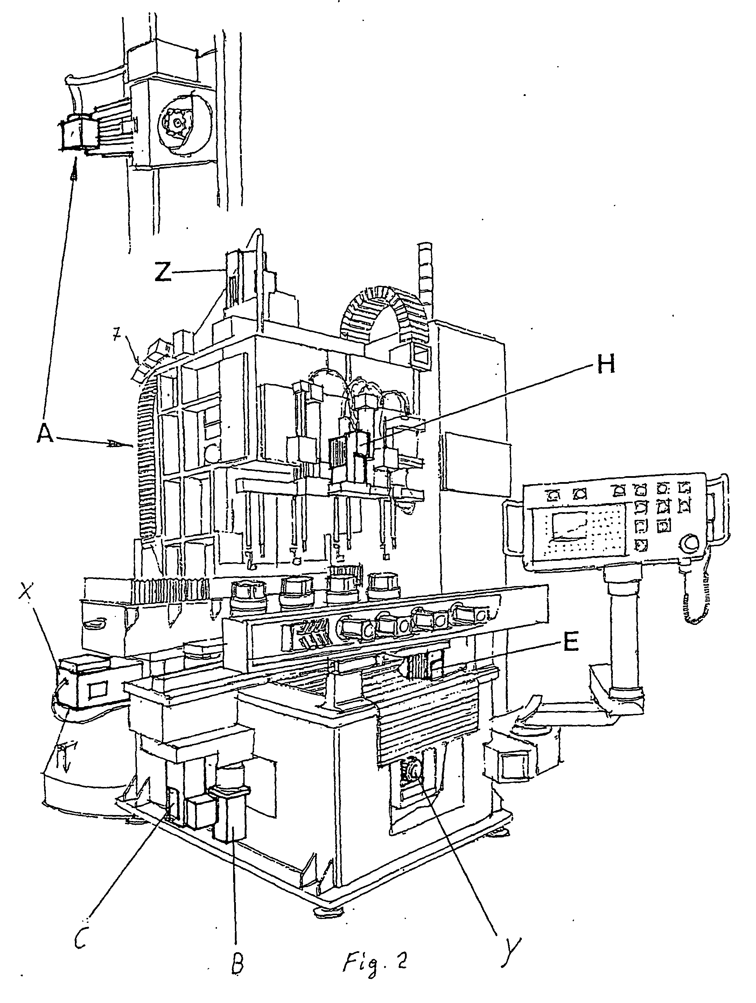

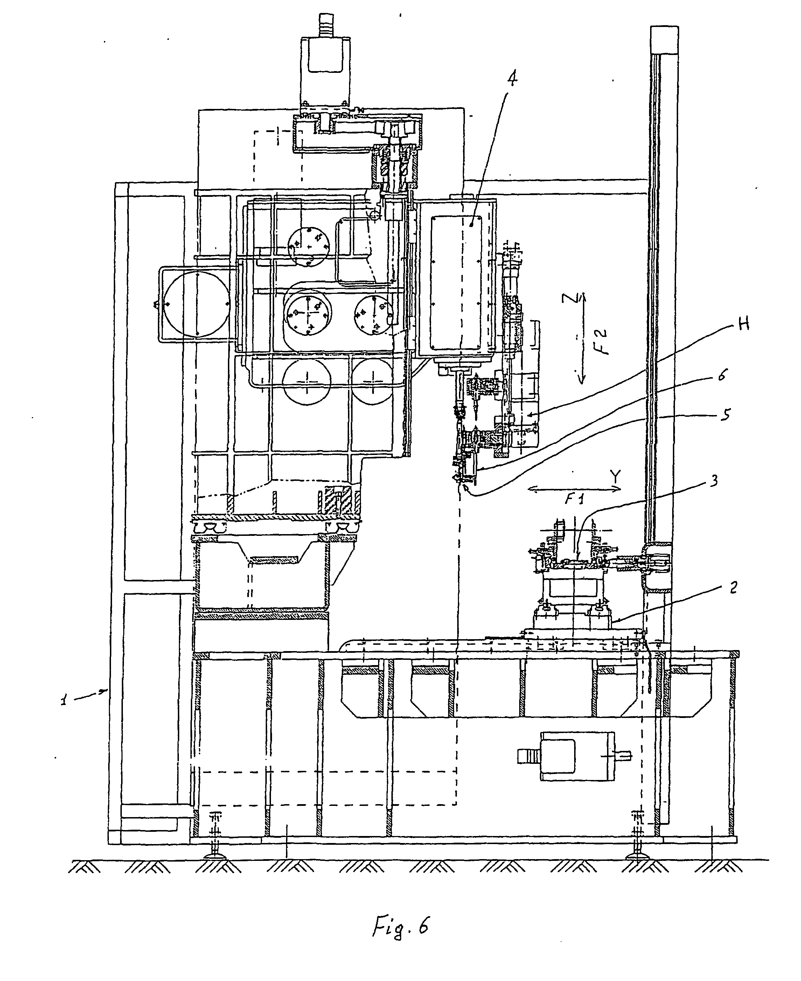

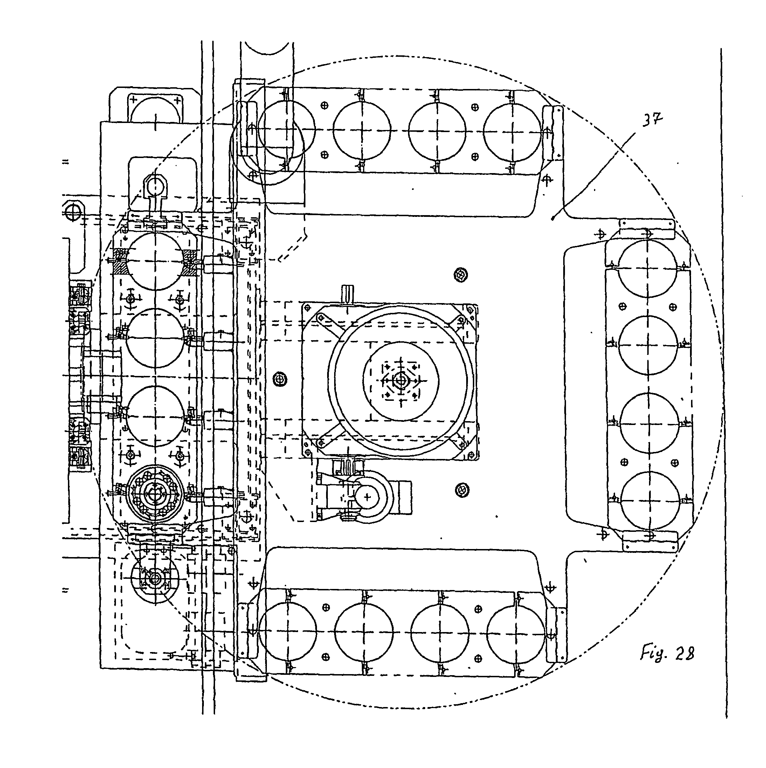

The machine according to the present invention, is characterised by the following basic components:
a) a structure or machine base 1 (Fig. 6) supporting and grouping or connecting together the single assemblies, according to the desired configurations and positions;
b) a carriage 2, movable horizontally along guides, in the directions indicated by the double arrow F1 (Fig. 6) (this movement being controlled by the axis Y), wherein said carriage supports the mandrels 3 which are motor driven and controlled by the axes B and E; the pallets supporting the stators to be "wound", are locked on these mandrels;
c) a carriage 4 (Fig. 6), movable vertically along guides, in the directions indicated by the double arrow F2 (this movement being controlled by the axis Z), wherein this carriage 4 supports:
   - a needle support head, movable longitudinally along guides, whose movement is controlled by the axis X;
   - the needles 5, dispensing the electrically conductive wire, whose movements are controlled by the axis A and C;
   - the forks 6, which may act on the conductive wire by guiding it during the winding steps and during the displacement from one pole to the next, said forks being controlled by the axis H;
d) a device 7 (Figs. 2, 3, 34, 35) for tensioning the electrically conductive wire;
e) a service plate 34 (Fig. 29), carrying the indexed pallets 35 used to support the stators 14 to be simultaneously wound;
f) a device allowing to lock the pallets 35 supporting the stators 14, on the respective mandrels 3 (Fig. 6 and 29);
g) a device (optional), located near each pallet 35, used to automatically anchor thereon said electrically conductive wire;
h) a device (optional) used to automatically cut the conductive wire, arranged near each pallet;
i) an automatic mechanical hand 37 (Figs. 27 and 28), or robot (optional), including several stations, suited to replace said service plate carrying the stators and pallets;
l) a cabinet containing all necessary electric, electronic and pneumatic apparatus realised according to known configurations;
m) a console for control purposes;
n) the relevant programming software;
o) all necessary circuits suited to obtain the required functions, realised according to known configurations;
p) the required lubrication circuits, realised according to known configurations;
q) safety means against accidents, realised according to the law existing in the country where the winding machine is used;

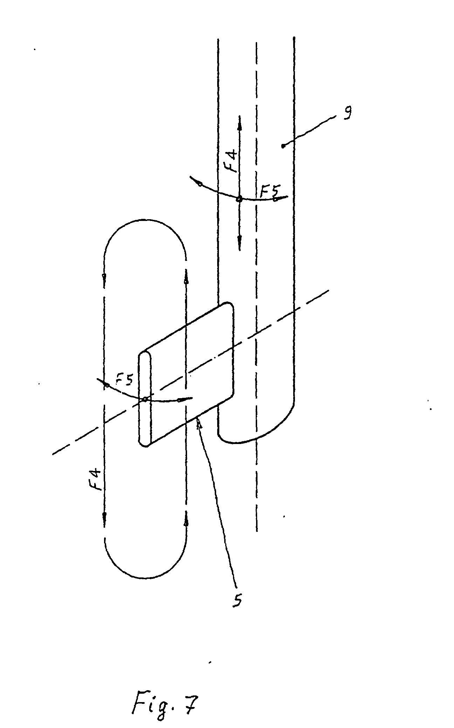

The needle 5 (Fig. 6) which feeds the electrically conductive wire 8 is shown in detail in Figs. 18 to 25 and is characterised in that it has a central hole 43 (Figs. 20, 21), whose diameter is chosen according to the diameter of the wire being used, and said hole, both at the inlet and outlet is widely rounded in all directions, according to radii which are related to the wire diameter. Figs. 23 and 24 show how the needle 5 can be inserted on the needle carrying rod 9; the arrows F9 and F10 (Fig. 23) indicate the directions along which may slide the electrically conductive wire. In Fig. 7, the various arrows indicate the movements imparted to the needle 5:
- arrow F4 = vertical reciprocating motion;
- arrow F5 = "training" movement; it should be noted that the mechanical assemblies required for these movements are neither shown nor described, since they only require ordinary skill and common knowledge.

Moreover, in Fig. 24 and 25 other details are shown.

For instance, at the lower end of the rod 9 carrying the needle 5, there is provided, according to known configurations, an elastically biased take-up device 44 like those used in the textile industry, whose function is to compensate the varying amount of wire length required during the winding operation; moreover, there is the need to provide guide bushes 45 for the wire, arranged inside the rod 9.

All mentioned mechanical assemblies could be realised in any known form whatever, and are synchronised with respect to each other and apt to move each component of the machine according to electronic programs specified by custom-made software. Specifically, the machine comprises several parts which will now be described in more detail.

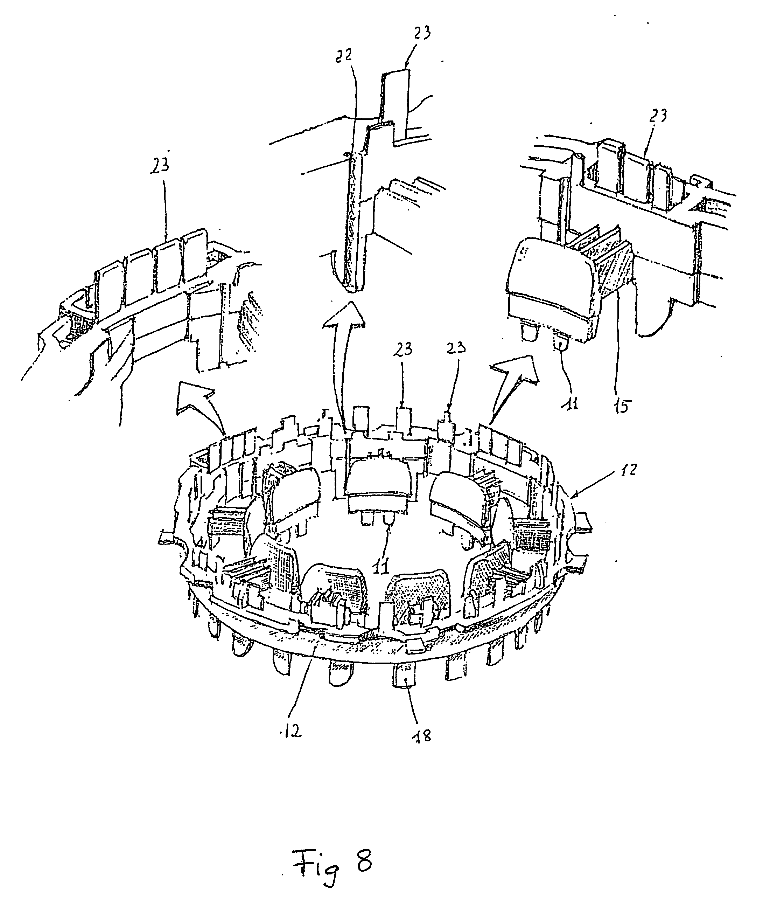

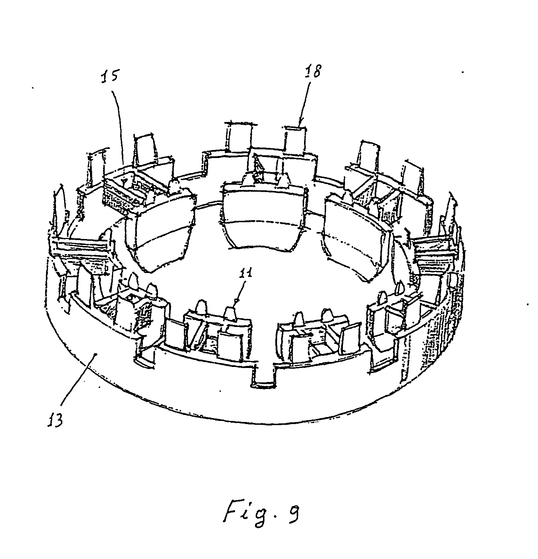

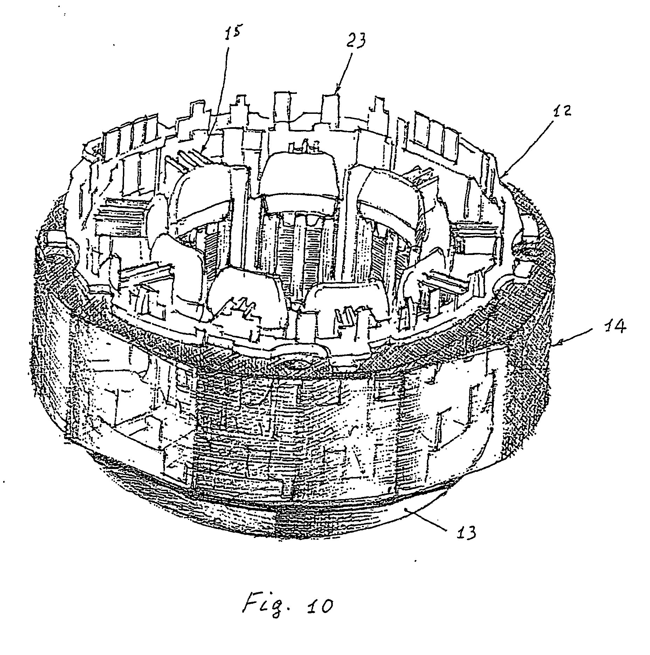

The ferromagnetic core laminations (Fig. 1) which form the stator 14 (Fig. 10) to be "wound", have poles 20 with inner ends provided with recesses or seats 10; the teeth 11 of the head portions 12 (Fig. 8, upper) and 13 (Fig. 9, lower) are introduced in said seats 10, in order to complete the assembling of the stator 14, during which said head portions are inserted on the two ends of the stator 14, as shown in Fig. 10; the purpose is to obtain a stable orientation of the head portions 12 and 13 with respect to the pole shoes of the stator 14.

Said head portions 12 and 13 are moulded using thermoplastic material (or in any case in a non-ferromagnetic material), and have the function to facilitate and make the winding operation possible.

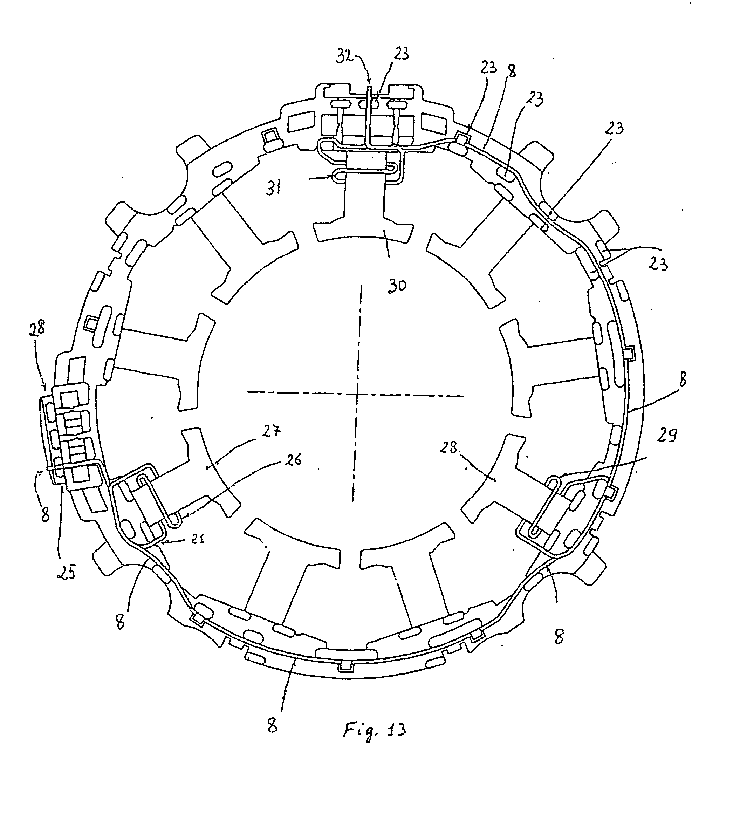

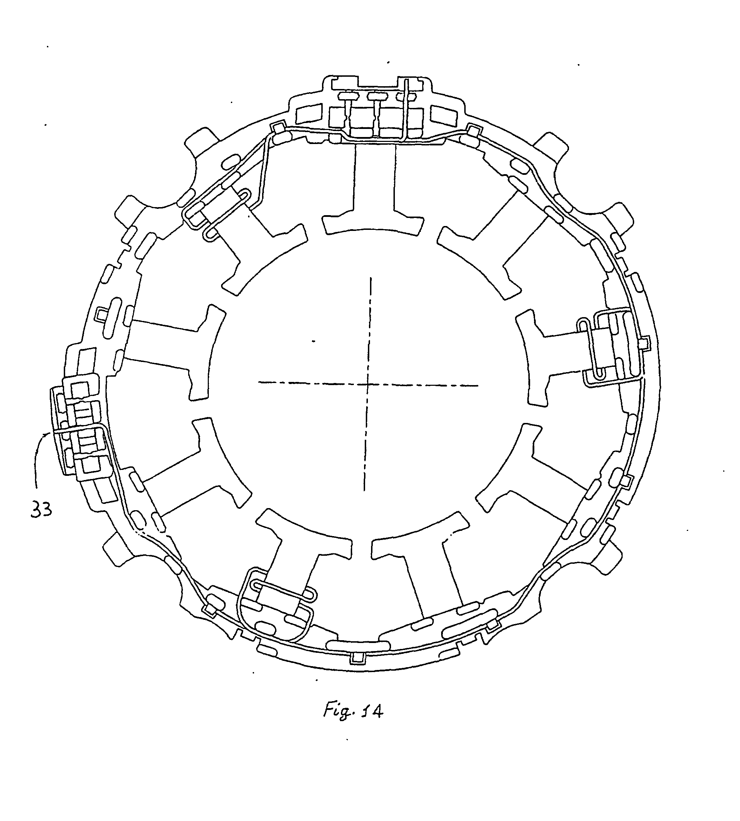

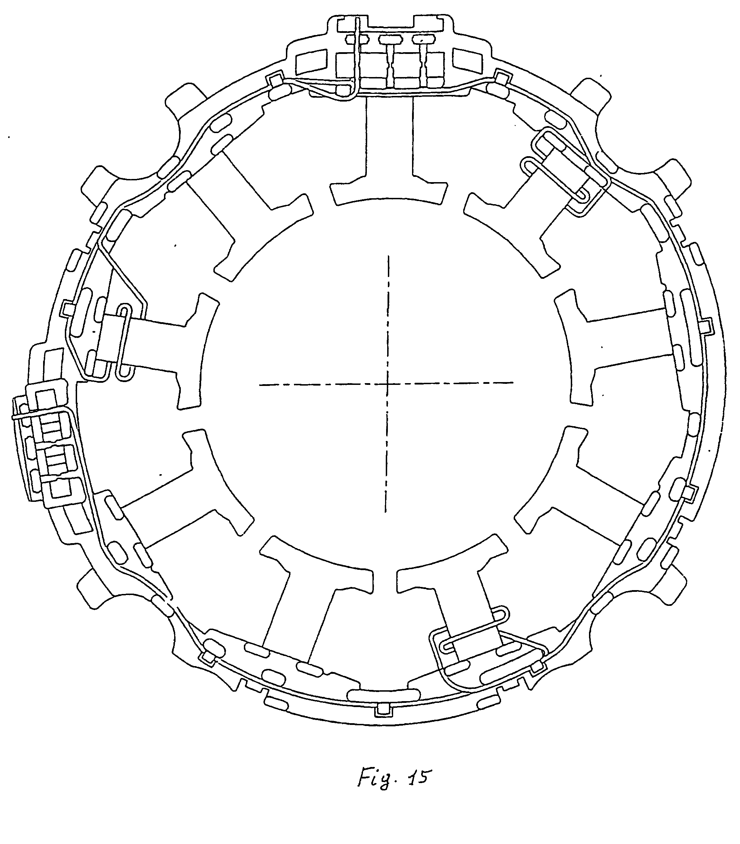

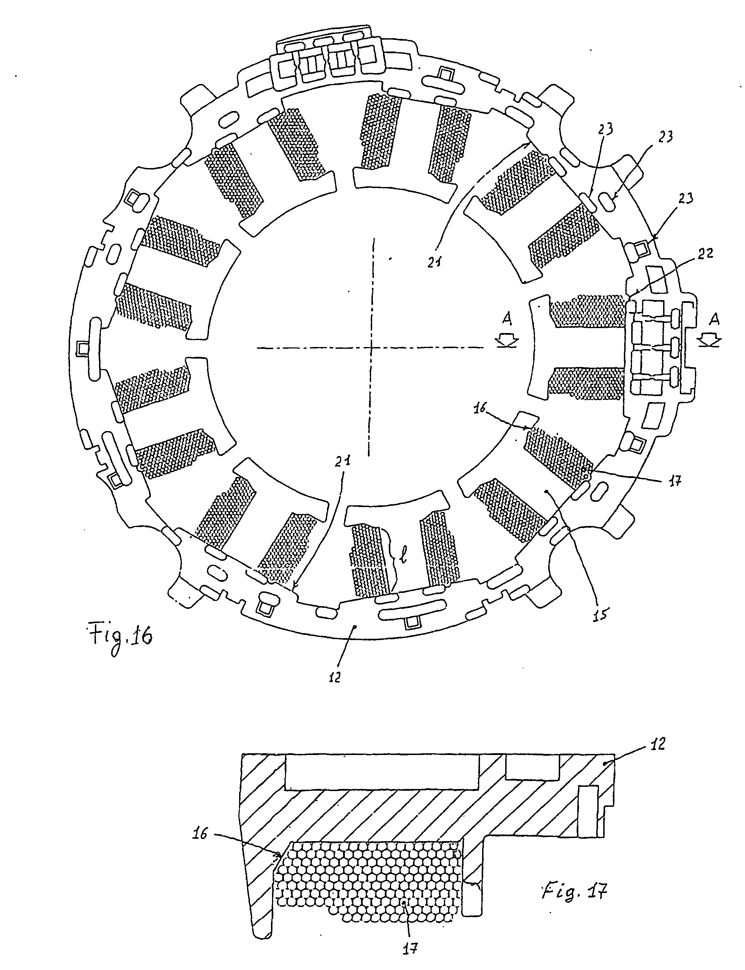

The upper head portion 12 (Fig. 8, 16 and 17), besides having its reference teeth 11 located on the lower part of the inner end of respective arms 15, shaped according to the configuration of the pole shoes of the stator, is also characterised by the following features:
a) the length "I" of the inner contour of the arms 15 (Fig. 16) is a multiple of the conductive wire diameter to be wound in a uniform manner;
b) the inner contour 16 of the arm ends 15, is shaped so that it will be possible to contain an integer number of turns for each layer overlapping the underlying layers, taking account of the fact that the turns of each layer comprised in a coil 17, are arranged in an ordered, closely packed manner, optimising the available space, as shown in Figs. 16 and 17 (the Italian and French terms for this arrangement is "quinconce", the English term is "quincunx ", meaning staggered or "zig-zag");
c) a plurality of projecting fins 18, is arranged on a circumference, and is centred and introduced inside the ends of the core laminations pack 14 (Fig. 8), coming in contact with the external diameter "De" of the slots 19 which separate the pole shoes 20 from each other (Fig. 1).
d) It has an annular configuration wherein the external part is circular and the internal part is polygonal, the number of sides 21 corresponding to the number of pole shoes of the stator to be wound (Fig. 16).
e) It has as many arms 15 as sides of the polygonal part.
f) It has a groove 22 (Figs. 8 and 16), realised on each side of the polygon, in proximity of the insertion site of the arms 15.
g) A plurality of fins 23 (Fig. 8 and 16), projects from the opposite side with respect to the alignment or matching fins 18, wherein the number, positions and dimension of the former fins, are selected (see Fig. 13) in such a way as to allow: the hooking of the conductive wire in the starting position 25 of the winding, the winding of the first coil 26 onto the pole shoe 27, the translation of the wire 8 as far as the polarity 28, the winding of the wire to form the coil 29, the translation of the wire 8 as far as the polarity 30 in order to form the coil 31, the exit of the wire at 32, and the hooking of the conductive wire 8 to an appropriate fin (not shown); thereafter, the wire enters again at 33 (Fig. 14), and the same operation is repeated in order to wind the second tern of uniformly and regularly wound coils, and finally, the same operation is repeated for the third tern of coils (Fig. 15).

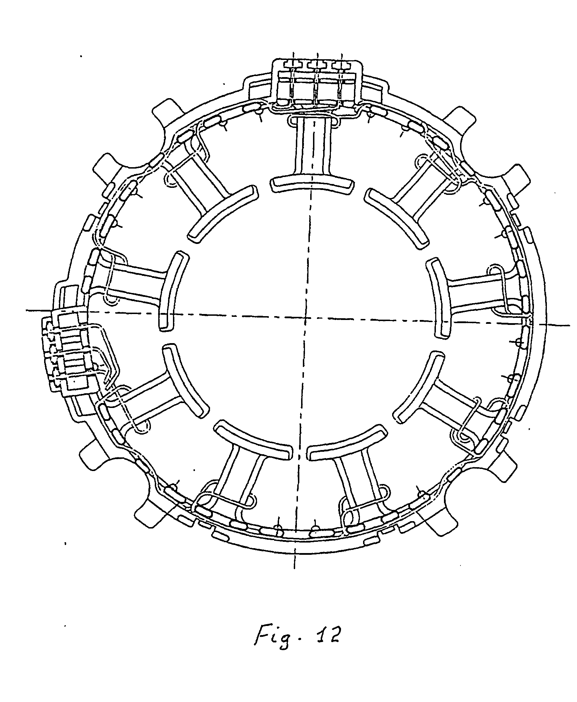

At the end of this operation, the configuration shown in Fig. 12 is obtained.

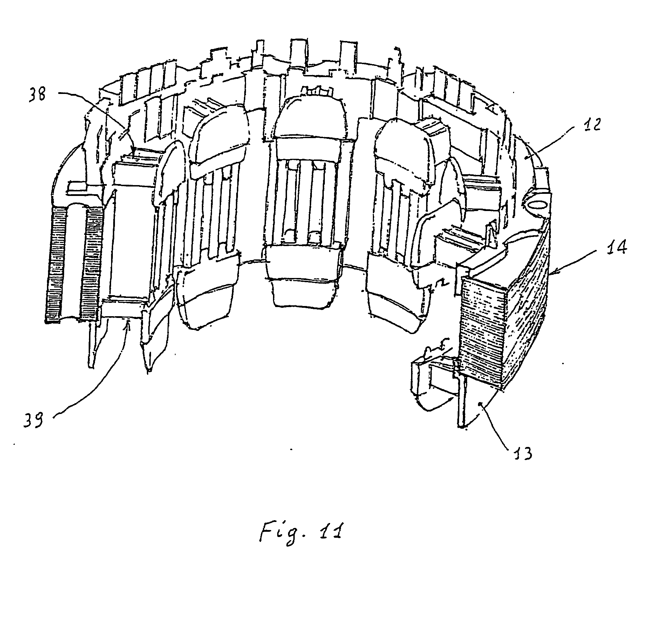

In fact, the electrically conductive wire is not directly wound on the metallic pole shoes of the stator 14, but onto the sides (apexes) 38, 39 (Fig. 11) of the arms 15 of the upper head portion 12 and lower head portion 13 respectively, which are inserted on the ends of the stator body 14.

The configuration of said head portions, as shown in Figs. 16 and 17, allows to form uniform layers of coil turns, as illustrated in Fig. 17.

The lower head portion 13 (Fig. 9) is also characterised in that it has a plurality of teeth 11, fins 18 and arms 15, whose size and form are identical to those of the upper head portion 12.

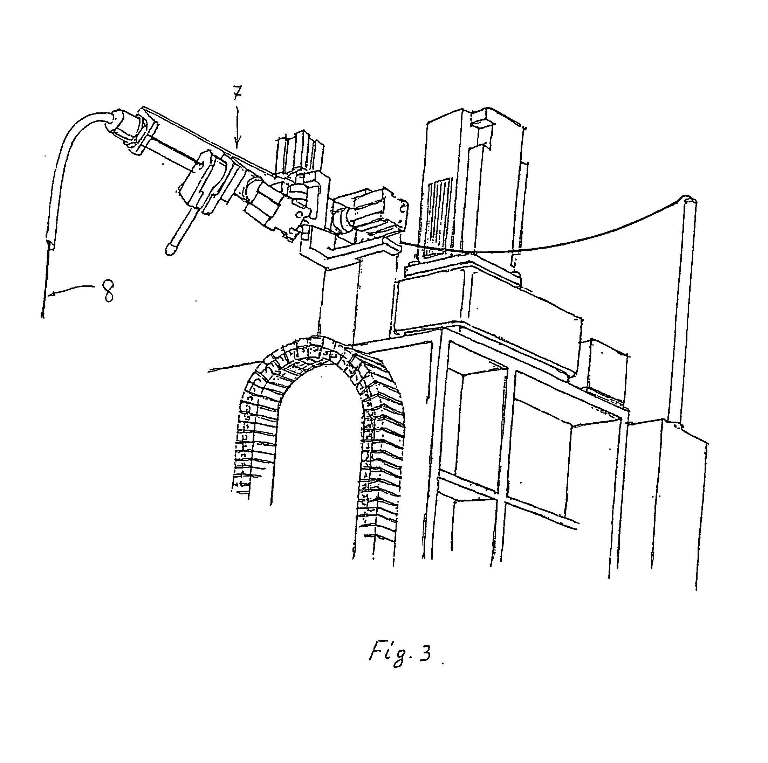

The configuration of the device 7 (Fig. 3) for tensioning the electrically conductive wire 8 is shown in Figs. 34 and 35, wherein 46 denotes the inlet hole or passage of the conductive wire, and 47 the outlet wire guide, whereas numeral 48 indicates a plurality of tensioning apparatus which are all characterised by a small disk 49, which may be stationary or rotatable around a central pin, said small disk being mounted, in a radial direction, in contact with the conductive wire 8; moreover, each tensioning apparatus comprises a small disk 50, which is stationary or rotatable, which may be made to approach the conductive wire 8, and, by using a mechanical or pneumatic spring, whose pushing force can be calibrated, can be used to apply a friction force on the conductive wire when the latter slides between said two disks 49, 50. The devices 48, which are assembled as separate modules, are not aligned, but have different inclinations, as shown in Fig. 35, so as to prevent the conductive wire 8 from being subjected to a frictional force always on the same surface, at each tensioning device, with the risk of eroding the insulating layer of the wire 8. The closing force by which the disks 49, 50 retain the wire 8, besides being adjustable, will be very small and is calibrated according to the diameter of the wire 8.

The operation of the device according to the present invention will now be described. The operator mounts corresponding head portions 12, 13 on four respective stators 14; then, he prepares, outside the machine, the service plate 34 (Fig. 29), by placing thereon four indexed stator supporting pallets 35 with four corresponding stators 14; thereafter, he puts on the machine the plate 34, using appropriate reference pins 40 for determining its correct position. The axes B-E-Y, disposed in the "zero" position, allow the simultaneous introduction of the four pallets 35 on the respective mandrels 3, which are provided with a locking ring nut 58.

Then, the operator pushes the start button, whereby:
- four pneumatic latches 41, by preventing initially the rotation of the ring nuts 58 used for locking the stators, allow the automatic "hooking" of the pallets on which the stators have been mounted, by means of the mandrels 3 which are set in rotation;
- the four wire guiding forks 42 (Fig. 25) associated to the needles 5, move downwards to a position astride the conductive wire 8, being thereby ready for the first connection (Fig. 13);
- the wire 8, by a combined action of the axis A-Y-E-X-Z-H, is inserted in the inlet connector 25, is guided and inserted in the slot 22 obtained on the upper head portion 12, and is prepared for the winding of the first coil 26;
- the wire guiding forks 42 move upwards, away from the wire, and the machine realises the winding operation automatically, forming a stratified winding 26, according to a predetermined program;
- the wire guiding forks 42 move downwards again, and through a combined movement of the axes A-Y-E-X-Z-H they guide the conductive wire and introduce it in the proper seats, up to the second pole 28;
- the forks 42 move upwards a second time;
- the stratified coil 29 is formed;
- the steps are repeated until the third coil 31 is wound, and this completes the first tern of coils;
- the wire guiding forks 42 move downwards again, thereby engaging the conductive wire 8, and through a combined motion of the axes A-Y-E-X-Z-H they guide and hook the conductive wire in the proper seats formed on the upper head portion 12, they hook it inside the outlet connector 32, and after having laid the conductive wire along a so-called "service path", they prepare it for a the second connection 33 (Fig. 14);
- the winding of the second and third terns of coils is then performed as previously described;
- when the winding is completed, the axes B-E-Y return to their "zero" position (start position);
- the latches 41 lock the ring nuts 58 again;
- the axis E rotates anticlockwise by 1/3 of a complete revolution, thereby unlocking the stator supporting pallets, and comes to rest in the "zero" position;
- the operator cuts the conductive wires associated to each stator, in proximity of the latter, and winds up the portions of wire projecting out of the needles, on an appropriate service peg or post;
- the operator unloads the service plate 34 carrying the already wound stators and the respective pallets;
- and he puts four new stators to be wound, on a new service plate 34, thereby starting a new cycle.

As mentioned above, the machine may be equipped with.
- a device for automatically cutting and hooking the conductive wire;
- a device for the automatic loading/unloading - comprising several stations - for the service plates 34 and their respective pallets and stators.

The invention, as disclosed, may be modified in different ways, which are all covered by the same inventive concept; moreover, all details may be replaced with other ones, which are technically equivalent.

## Claims

1. System suited to uniformly wind electrically conductive wires (8) directly on closed slot stators (14), the stator (14) having a stator pack formed by ferromagnetic core laminations having a special contour, special head portions (12, 13) which complete the stator (14) and which allow to effect the winding with turns disposed regularly in adjacent positions, and overlapping layers arranged in a staggered manner, without crossings, the head portions (12, 13) having an anular configuration and hooking means (23); the system comprising a digitally controlled winding machine comprising a special needle (5) suited to feed and dispense the electrically conductive wire (8) used to realise the winding; a plurality of electronically controlled units (A-B-C-Y-E-X-Z-H); a mechanical assembly controlled by the first of these units, (A), which moves the needle (5) according to a vertical reciprocating motion (F4) which is combined with a horizontal oscillatory or "training" motion (F5); a mechanical assembly, controlled by the second of said units, B, which moves the stator (14) according to a rectilinear reciprocating motion, in order to centre the passage of the needle (5) between the poles (20); a mechanical assembly, controlled by a third of said units, C, which is synchronised with respect to the second unit B, in order to increase or decrease the oscillation or training amplitude of the needle (5); a mechanical assembly, controlled by a fourth unit, Y, for translating the stator horizontally along the axis Y in order to perform the stratification (17) of the turns; a mechanical assembly, controlled by a fifth unit, E, which rotates the stator (14), in order to pass from the pole shoe, on which the winding operation has been completed, to the next pole shoe, on which the winding is continued without interruption of the wire continuity; a mechanical assembly, controlled by a sixth unit, X, which performs the longitudinal translation in the X direction of a needle supporting head; a mechanical assembly, controlled by a seventh unit, Z, which realises the vertical translation in Z direction of the needle supporting head; a mechanical assembly, controlled by an eighth unit H, which actuates a fork (42) acting on the wire (8) during its passage from the outside to the inside of the stator slots (19), and vice versa, and which is suited to insert the conductive wire (8) between the hooking means (23), along the path leading from one pole shoe to be wound, to the next pole shoe; a tensioning device (7; 48, 49, 50) of the electrically conductive wire (8); a service plate (34), on which an indexed pallet (35) is loaded for each stator to be wound at the same time; a locking device (58), allowing to lock/unlock a plurality of stator support pallets (35) on respective mandrels (3); an automatic wire anchoring device, for anchoring the wire (8) at the beginning and end of the winding operation; an automatic wire cutting device, for automatically cutting the wire (8) at the end of the winding operation; an automatic loading/unloading device, including several stations, for said service plate (34) supporting said pallets (35); electromechanical means, suited for the functions to be performed by the various moving members; electronic means, suited for programming the various units; a pressure lubrication plant; and safety means for protection against accidents.

2. A system according to claim 1, wherein said special needle used to feed and dispense said electrically conductive wire, comprises:
a needle nozzle (5), which is arranged with horizontal axis, which dispenses the electrically conductive wire (8);
a hollow rod (9), supporting said needle nozzle (5), and disposed with its axis extending vertically,
a wire take-up (44), suited to compensate the varying amount of required wire length in the unit of time, during the winding step, and which is arranged at the lower end of said hollow rod (9); and
guide bushes (45) for the wire (8), mounted inside said hollow rod (9).

3. A system according to claim 2, wherein two movements are imparted to the rod (9) supporting the needle nozzle (5), that is a reciprocating movement in the vertical direction (F4), and a rotational reciprocating movement, or training (F5).

4. A system according to claims 2 and 3, wherein said vertical and rotational reciprocating movements, imparted to said hollow rod (9), are obtained using mechanical assemblies.

5. A system according to claim 2, wherein said needle nozzle (5) has the following features:
it has a shape and size suited to be inserted between the poles of the stator to be provided with the windings;
it has an inner hole, such that:
- its cross section is variable in all directions;
- it has a size which is adapted to the size of a wire to be wound;
- it is rounded at the wire inlet portion, corresponding to the diameter of the wire;
- it is rounded as much as possible at the wire outlet portion.

6. A system according to claim 1, wherein said ferromagnetic core laminations which form the stator to be wound, are provided, at the inner end of the pole shoes, with seats or recesses (10) receiving respective teeth (11) formed on the head portions (12 and 13), in order to retain said head portions, maintaining their orientation with respect to the pole shoes of the stator.

7. A system according to claim 1, wherein there are two of said head portions, that is an upper (12) and a lower one (13), which are suited to be inserted and retained at the respective two ends of the stator (14) to be wound, in order to obtain a winding without crossings.

8. A system according to claim 7, wherein the upper head (12) is **characterised by** :
- an annular structure with dimensions adapted to the size of the stator whereon it will be inserted;
- said annular structure being externally circular and internally polygonal, and comprising a number of sides corresponding to the number of pole shoes of the stator;
- inner arms (15), whose number corresponds to the number of pole shoes of the stator, extending from the centre of each polygon side and protruding towards the centre, and conforming substantially, with regard to their size and shape, to the size and shape of said pole shoes;
- a plurality of teeth (11) obtained and arranged on the lower part and inner end of said arms (15), having size and shape suited for their insertion inside the seats (10) formed on the ferromagnetic core laminations which make up the stator;
- a plurality of protruding fins (18), arranged along a circumference, on the same side where the teeth (11) are formed, said fins being apt to be aligned and introduced in one end of the laminar pack (14) making up the stator to be wound, and coming in contact, with a small play, with the external diameter "De" of the slots (19) separating the pole shoes (20) from each other;
- a groove (22), formed on each side of the polygon, near to the point where each arm (15) is inserted, and apt to receive the electrically conductive wire;
- a plurality of fins (23), protruding from the opposite side with respect to the alignment fins (18), and whose number, size and positions, are suited to allow the hooking of the conductive wire (8) in the starting position (25) of the winding, and to retain the wire in a correct position, while the latter is translated along a zig-zag path, from one pole to the next pole of each coil tern.

9. A system according to claim 7 and 8, wherein the lower head portion (13) differs from the upper head portion (12), in that it does not comprise any wire hooking fins (23) and grooves (22).

10. A system according to claims 7, 8, 9, wherein the shape, space and dimension of the seats where the coil turns are received, are such that an integer number of coil turns may be comprised in each layer, and each layer can be overlapped to the other ones with a quincunx arrangement of the turns with respect to each other.

11. A system according to claims 7, 8, 9, wherein the upper and lower head portions (12, 13) can be realised using a non magnetic material, preferably an electrically insulating material, like thermoplastic or thermosetting materials.

12. A system according to claim 1, wherein the winding operation is not performed directly on the ferromagnetic laminations pack which form a conventional stator, but directly on the arms (15) of said upper and lower head portions (12, 13), after their insertion on the laminar pack, defining an assembly which forms the real stator on which the winding operation is performed.

13. A system according to claim 1, wherein said controlled units are apt to govern respective mechanical assemblies, which actuate and move the various members of the winding machine, which are suited to carry out automatically the winding operation in conformity with predetermined winding programs.

14. A system according to claim 13, wherein the software for programming the controlled units is dedicated to the purpose of the present winding machine.

15. A system according to claim 1, wherein various mechanical assemblies are used to motorise the devices employed to feed and dispense the electrically conductive wire and to perform the winding operation.

16. A system according to claim 1, wherein said mechanical assembly controlled by the unit H, imparts to a fork (42) arranged with a vertical axis, a vertical reciprocating motion (F2) and a rotational reciprocating motion (F8).

17. A system according to claim 16, wherein said fork (42) can engage the electrically conductive wire (8), and in combination with other controlled units, it is suited to guide the wire along a zig-zag path, during its passage from the outside to the inside of the stator slots and vice versa, and during its hooking at the beginning and end of the winding operation.

18. A system according to claim 1, wherein said tensioning device of the electrically conductive wire comprises modular elements (48), each including two small disks (49, 50) facing each other, one of them being aligned and in contact with said conductive wire (8), and the other being axially movable and biased by means of a mechanical or pneumatic spring, in order to act on the conductive wire by a frictional force during its passage between the small disks.

19. A system according to claim 18, wherein the modular elements (48) are assembled according to different inclinations.

20. A system according to claim 1, wherein said service plate carrying one or more stator supporting pallets, may be manually inserted or extracted by the operator from its position of use, or may be manipulated automatically by a loading/unloading device .

21. A system according to claim 1, wherein the movements of the device (41, 58) allowing to lock and unlock, on or from the mandrels, said stator supporting pallets are synchronised with the movements of the electronically controlled units.

22. A system according to claim 1, wherein the intervention of the automatic wire anchoring and cutting devices, operating at the end of the winding operation is synchronised with the movements of the electronically controlled units.

## Patentansprüche

1. Eine Vorrichtung, welche dazu geeignet ist, elektrisch leitende Leitungen (8) gleichmäßig direkt auf Statoren (14) mit geschlossenen Nuten zu wickeln, wobei der Stator (14) aufweist einen Statorblock, welcher aus ferromagnetischen Kernlaminaten mit einer speziellen Kontur gebildet ist, spezielle Kopfabschnitte (12, 13), welche den Stator (14) vervollständigen und ein Wickeln mit regelmäßig in benachbarten Positionen angeordneten Windungen ermöglichen, und überlappende Schichten, die, ohne Kreuzungen, in einer versetzten Weise angeordnet sind, wobei die Kopfabschnitte eine ringförmige Gestalt und Einhakmittel (23) aufweisen; das System weist eine digital gesteuerte Aufwickelmaschine auf, welche eine Spezialnadel (5) aufweist, die dazu geeignet ist, die elektrisch leitende Leitung (8), die für die Verwirklichung der Wicklung verwendet wird, zuzuführen und zu verteilen; eine Vielzahl von elektronisch gesteuerten Einheiten (A-B-C-Y-E-X-Z-H); eine von der ersten (A) dieser Einheiten gesteuerte mechanische Vorrichtung, welche die Nadel (5) entsprechend einer vertikalen Hin- und Herbewegung (F4) bewegt, welche mit einer horizontalen Oszillations- oder "Trainings-" Bewegung (F5) kombiniert ist; eine von der zweiten (B) der genannten Einheiten gesteuerte mechanische Einrichtung, welche den Stator (14) entsprechend einer geradlinigen Hin- und Herbewegung bewegt, um den Durchgang der Nadel (5) zwischen den Polen (20) zu zentrieren; eine von der dritten (C) der genannten Einheiten gesteuerte mechanische Einrichtung, welche mit der zweiten Einheit B synchronisiert ist, um die Oszillations- oder Trainingsamplitude der Nadel (5) zu erhöhen oder zu verringern; eine von einer vierten Einheit Y gesteuerte mechanische Einrichtung zur horizontalen Versetzung des Stators entlang der Achse Y, um die Begradigung (17) der Windungen durchzuführen; eine von einer fünften Einheit E gesteuerte mechanische Einrichtung, welche den Stator (14) rotiert, um von dem Polschuh, auf welchem der Aufwickelvorgang beendet worden ist, zum nächsten Polschuh zu wechseln, auf welchem das Aufwickeln ohne Unterbrechung der Leitungskontinuität fortgesetzt wird; eine von einer sechsten Einheit X gesteuerte mechanische Einrichtung, welche die longitudenale Versetzung in X-Richtung eines die Nadel stützenden Kopfes bewerkstelligt; eine von einer siebten Einheit Z gesteuerte mechanische Einrichtung, welche die vertikale Versetzung in Z-Richtung des die Nadel stützenden Kopfes realisiert; eine von einer achten Einheit H gesteuerte mechanische Einrichtung, welche eine Gabel (42) betreibt, die auf die Leitung (8) während deren Durchgang von der Außenseite zu der Innenseite der Stator-Nuten (19), und umgekehrt, einwirkt und welche dazu geeignet ist, die leitende Leitung (8) zwischen die Einhakmittel (23) einzuführen, entlang des Weges, welcher von dem einen zu umwickelnden Polschuh zu dem nächsten Polschuh führt; eine Spannungseinrichtung (7; 48, 49, 50) der elektrisch leitenden Leitung (8); eine Betriebsplatte (34), die für jeden Stator, der zur selben Zeit gewickelt werden soll, mit einem mit einem Index versehenen Laderost (35) beladen wird; eine Verriegelungseinrichtung (58), welche die Ver-/Entriegelung einer Vielzahl von Stator-Laderosten (35) auf entsprechenden Dornen (3) erlaubt; eine automatische Leitungsverankerungseinrichtung zum Verankern der Leitung (8) am Anfang und am Ende eines Wicklungsvorgangs; eine automatische Leitungsschneideeinrichtung zum automatischen Abschneiden der Leitung (8) am Ende des Wicklungsvorgangs; eine automatische Be-/Entladeeinrichtung, welche mehrere Stationen umfasst, für die genannte Betriebsplatte (34), welche die besagten Laderoste (35) aufnimmt; elektromechanische Mittel, welche für die von den verschiedenen sich bewegenden Teilen ausgeführten Funktionen geeignet sind; elektronische Mittel, welche für die Programmierung der verschiedenen Einheiten geeignet sind; eine mit Druck arbeitende Abschmieranlage; und Sicherheitsmittel zum Schutz vor Unfällen.

2. Eine Vorrichtung nach Anspruch 1, wobei die genannte Spezialnadel, welche zum Zuführen und Verteilen der genannten elektrisch leitenden Leitungen aufweist:
eine Nadeldüse (5), welche entlang der horizontalen Achse angeordnet ist, welche die elektrisch leitende Leitung (8) verteilt;
einen hohlen Stab (9) welcher die besagte Nadeldüse (5) aufnimmt und dessen Achse sich vertikal erstreckend angeordnet ist,
eine Leitungsaufnahme (44) welche dazu geeignet ist, den variierenden Betrag der benötigten Leitungslänge pro Zeiteinheit während des Wicklungsschritts zu kompensieren und welche am unteren Ende des besagten hohlen Stabes (9) angeordnet ist; und
Führungsbuchsen (45) für die Leitung (8), welche innerhalb des genannten hohlen Stabes 9 angebracht sind.

3. Eine Vorrichtung nach Anspruch 2, wobei der die Nadeldüse (5) stützende Stab (9) mit zwei Bewegungen belegt ist, nämlich einer Hin- und Herbewegung in der vertikalen Richtung (F4) und einer rotierenden Hin- und Herbewegung oder Training (F5).

4. Eine Vorrichtung nach den Ansprüchen 2 und 3, wobei die genannten vertikalen und rotierenden Hin- und Herbewegungen, mit welchen der hohle Stab (9) belegt ist, durch mechanische Konstruktionen erzielt werden.

5. Eine Vorrichtung nach Anspruch 2, wobei die genannte Nadeldüse (5) die folgenden Merkmale aufweist:
Sie hat solche Form und Größe, dass sie dazu geeignet ist, zwischen den Polen des Stators eingeführt zu werden und mit den Wicklungen versehen zu werden;
Sie hat ein derartiges inneres Loch, dass:
- ihr Durchmesser in allen Richtungen variabel ist;
- sie hat eine Größe, welche auf die Größe der zu wickelnden Leitung angepasst ist;
- sie ist am Leitungseingangsabschnitt entsprechend des Durchmessers der Leitung abgerundet;
- sie ist am Leitungsausgangsabschnitt so stark wie möglich abgerundet.

6. Eine Vorrichtung nach Anspruch 1, wobei die genannten ferromagnetischen Kernlaminate, welche den zu umwickelnden Stator bilden, am inneren Ende der Polschuhe mit Sätteln oder Ausnehmungen (10) versehen sind, so dass man diesbezüglich Zähne (11) erhält, die auf den Kopfabschnitten (12 und 13) gebildet sind, um die genannten Kopfabschnitte festzuhalten, wobei deren Ausrichtung bzgl. der Polschuhe des Stators erhalten bleibt.

7. Eine Vorrichtung nach Anspruch 1, wobei zwei der genannten Kopfabschnitte vorhanden sind, d.h. ein oberer (12) und ein unterer (13), welche dazu geeignet sind, an den entsprechenden beiden zu umwickelnden Enden des Stators (14) eingefügt und festgehalten zu werden, um Windungen ohne Kreuzungen zu erhalten.

8. Vorrichtung nach Anspruch 7, wobei der obere Kopf (12) charakterisiert ist durch:
- eine Ringstruktur mit Abmessungen, die an die Größe des Stators angepasst sind, auf welchem er eingefügt werden wird;
- das Merkmal dass die genannte Ringstruktur äußerlich ringförmig und innerlich polygonförmig ist und eine Seitenanzahl entsprechend der Zahl der Polschuhe des Stators aufweist;
- innere Arme (15), deren Anzahl mit der Zahl der Polschuhe des Stators korrespondiert, die sich vom Zentrum jeder Polygonseite aus erstrecken und in Richtung des Zentrums hineinragen und in ihrer Größe und Form im Wesentlichen an die Größe und die Form der genannten Polschuhe angepasst sind;
- eine Vielzahl von Zähnen (11), welche am unteren, inneren Ende der Seitenarme ausgebildet und angeordnet sind, wobei sie eine solche Größe und Form aufweisen, dass sie für eine Einführung in die Sättel (10), welche auf den ferromagnetischen Kernlaminaten, welche den Stator bilden, ausgeformt sind, geeignet sind;
- eine Vielzahl von hervorstehenden Lamellen (18), welche entlang eines Umkreises auf derselben Seite, auf welcher die Zähne (11) ausgebildet sind, angeordnet sind, wobei die genannten Lamellen dazu geeignet sind, ausgerichtet zu werden und in ein Ende des Laminarblocks (14) eingeführt zu werden, welcher den zu umwickelnden Stator bildet, und mit wenig Spiel mit dem äußeren Durchmesser "De" der Nuten (19) in Kontakt zu kommen, welche die Polschuhe (20) voneinander trennen;
- eine Kerbe (22), die auf jeder Seite des Polygons nahe dem Punkt, wo jeder Arm (15) eingefügt ist, ausgebildet ist und dazu geeignet ist, die elektrisch leitende Leitung aufzunehmen;
- eine Vielzahl von Lamellen (23), die in Bezug auf die ausgerichteten Lamellen (18) von der entgegengesetzten Seite hervorstehen und deren Zahl, Größe und Anordnungsort dazu geeignet sind, das Einhaken der leitenden Leitung (8) in die Startposition (25) der Wicklung zu ermöglichen, und die Leitung in einer korrekten Position festzuhalten, während letztere entlang eines Zick-Zack-Pfades von einem Pol zum nächsten Pol jeder Spulen-Dreiergruppe versetzt wird.

9. Eine Vorrichtung nach Anspruch 7 und Anspruch 8, wobei der untere Kopfabschnitt (13) sich vom oberen Kopfabschnitt (12) darin unterscheidet, dass er keine Lamellen (23) zum Einhaken der Leitung und keine Kerben (22) aufweist.

10. Eine Vorrichtung nach den Ansprüchen 7, 8, 9, wobei die Form, der Abstand und die Abmessungen der Sättel, in welchen die Spulenwindungen aufgenommen werden, derart sind, dass eine gerade Anzahl von Spulenwindungen in jeder Schicht enthalten sein kann, und jede Schicht mit anderen mit einer Quincunx-Anordnung der Windungen bzgl. der Schichten zueinander überlappt werden kann.

11. Eine Vorrichtung nach den Ansprüchen 7, 8, 9, wobei der obere und der untere Kopfabschnitt (12, 13) durch Verwendung eines nicht magnetischen Materials realisiert werden können, vorzugsweise eines elektrisch isolierenden Materials wie thermoplastischen oder duroplastischen Materialien.

12. Eine Vorrichtung nach Anspruch 1, wobei der Aufwicklungsvorgang nicht direkt auf dem ferromagnetischen Laminatblock, welcher einen konventionellen Stator bildet, ausgeführt wird, sondern direkt auf den Armen (15) der genannten oberen und unteren Kopfabschnitte (12, 13), nach deren Einfügung in den Laminatblock, wodurch ein Aufbau definiert wird, welcher den realen Stator bildet, auf welchem der Wicklungsvorgang durchgeführt wird.

13. Eine Vorrichtung nach Anspruch 1, wobei die genannten gesteuerten Einheiten dazu geeignet sind, entsprechende mechanische Einrichtungen zu steuern, welche diejenigen zahlreichen Teile der Wicklungsmaschine betreiben und bewegen, die dazu geeignet sind, den Wicklungsvorgang automatisch in Übereinstimmung mit vorbestimmten Wicklungsprogrammen durchzuführen.

14. Eine Vorrichtung nach Anspruch 13, wobei die Software für die Programmierung der gesteuerten Einheiten dem Zweck der vorliegenden Wicklungsmaschine zugeordnet ist.

15. Eine Vorrichtung nach Anspruch 1, wobei die Vielzahl mechanischer Einrichtungen dazu verwendet werden, diejenigen Einrichtungen zum Zuführen und Verteilen der elektrisch leitenden Leitung und zum Ausführungen des Wicklungsvorgangs zu motorisieren.

16. Eine Vorrichtung nach Anspruch 1, wobei die genannte von der Einheit H gesteuerte mechanische Einrichtung eine vertikale Hin- und Herbewegung (F2) und eine rotierende Hin- und Herbewegung (F8) an eine entlang einer vertikalen Achse angeordnete Gabel (42) weitergibt.

17. Eine Vorrichtung nach Anspruch 16, wobei die genannte Gabel (42) die elektrisch leitende Leitung (8) erfassen kann und in Verbindung mit anderen gesteuerten Einheiten dazu geeignet ist, die Leitung während deren Durchgang von der Außenseite zu der Innenseite der Stator-Nuten und umgekehrt und während deren Einhaken am Anfang und am Ende des Wicklungsvorgangs entlang eines Zick-Zack-Pfades zu führen.

18. Eine Vorrichtung nach Anspruch 1, wobei die genannte Spannungseinrichtung der elektrisch leitenden Leitung modulare Elemente (48) aufweist, von welchen jedes zwei kleine einander zugewandte Scheiben (49, 50) umfasst, von welchen eine mit der genannten leitenden Leitung (8) ausgerichtet und mit dieser in Kontakt ist, und die andere axial beweglich und unter Verwendung einer mechanischen oder pneumatischen Feder vorgespannt ist, um auf die leitende Leitung während deren Durchgang zwischen den schmalen Scheiben mittels einer Reibungskraft einzuwirken.

19. Eine Vorrichtung nach Anspruch 18, wobei die modularen Elemente (48) unter verschiedenen Neigungswinkeln eingebaut sind.

20. Eine Vorrichtung nach Anspruch 1, wobei die genannte Betriebsplatte einen oder mehrere Stator-Laderoste trägt, manuell vom Bediener in seine Betriebsposition eingesetzt oder von dort entfernt werden kann oder automatisch von einer Lade/Entlade-Einrichtung gehandhabt werden kann.

21. Eine Vorrichtung nach Anspruch 1, wobei die Bewegungen der Einrichtung (41, 58), welche die Verriegelung und die Entriegelung des genannten Stator-Laderosts auf oder von den Dornen ermöglicht, mit den Bewegungen der elektronisch gesteuerten Einheiten synchronisiert sind.

22. Eine Vorrichtung nach Anspruch 1, wobei der Eingriff der automatischen Leitungsverankerungs- und
- abschneideeinrichtungen, welche am Ende des Wicklungsvorgangs in Betrieb sind, mit den Bewegungen der elektronisch gesteuerten Einheiten synchronisiert ist.

## Revendications

1. Système approprié pour enrouler uniformément des fils électriquement conducteurs (8) directement sur des stators fermés à fentes (14), le stator (14) ayant un bloc formant stator formé par des stratifications de noyau ferromagnétiques ayant un contour spécial, des parties spéciales formant têtes (12, 13) qui achèvent le stator (14) et qui permettent d'effectuer l'enroulement avec des spires disposées régulièrement dans des positions adjacentes, et des couches se chevauchant agencées en quinconce, sans croisements, les parties formant têtes (12, 13) ayant une configuration annulaire et un moyen d'accrochage (23) ; le système comprenant une machine d'enroulement commandée de façon numérique comprenant une aiguille spéciale (5) appropriée pour amener et distribuer le fil électriquement conducteur (8) utilisé pour réaliser l'enroulement ; plusieurs unités électroniquement commandées (A-B-C-Y-E-X-Z-H) ; un ensemble mécanique commandé par la première de ces unités, (A), qui déplace l'aiguille (5) selon un mouvement de va-et-vient vertical (F4) qui est combiné à un mouvement oscillant horizontal ou mouvement "d'entraînement" (F5) ; un ensemble mécanique, commandé par la deuxième desdites unités, B, qui déplace le stator (14) selon un mouvement de va-et-vient rectiligne, afin de centrer le passage de l'aiguille (5) entre les pôles (20) ; un ensemble mécanique, commandé par une troisième desdites unités, C, qui est synchronisé par rapport à la deuxième unité B, afin d'augmenter ou de diminuer l'oscillation ou l'amplitude d'entraînement de l'aiguille (5) ; un ensemble mécanique, commandé par une quatrième unité, Y, pour déplacer le stator horizontalement le long de l'axe Y afin d'effectuer la stratification (17) des spires ; un ensemble mécanique, commandé par une cinquième unité, E, qui fait tourner le stator (14), afin de passer de la pièce polaire, sur laquelle l'opération d'enroulement a été achevée, à la pièce polaire suivante, sur lequel l'enroulement est continué sans interruption de la continuité de fil ; un ensemble mécanique, commandé par une sixième unité, X, qui effectue le déplacement longitudinal dans la direction X d'une tête de support d'aiguille ; un ensemble mécanique, commandé par une septième unité, Z, qui réalise le déplacement vertical dans la direction Z de la tête de support d'aiguille ; un ensemble mécanique, commandé par une huitième unité, H, qui fait agir une fourchette (42) agissant sur le fil (8) pendant son passage de l'extérieur à l'intérieur des fentes de stator (19), et vice versa, et qui est approprié pour insérer le fil conducteur (8) entre le moyen d'accrochage (23), le long du chemin conduisant d'une pièce polaire devant subir un enroulement, à la pièce polaire suivante ; un dispositif de mise en tension (7 ; 48, 49, 50) du fil électriquement conducteur (8) ; une plaque de service (34), sur laquelle une palette indexée (35) est chargée pour chaque stator devant subir l'opération d'enroulement en même temps ; un dispositif de verrouillage (58), permettant de verrouiller / déverrouiller plusieurs palettes de support de stator (35) sur des mandrins respectifs (3) ; un dispositif d'ancrage automatique de fil, pour ancrer le fil (8) au début et à la fin de l'opération d'enroulement ; un dispositif de coupe automatique de fil, pour couper automatiquement le fil (8) à la fin de l'opération d'enroulement ; un dispositif de chargement / déchargement automatique, incluant plusieurs postes, pour ladite plaque de service (34) supportant lesdites palettes (35) ; un moyen électromécanique, approprié pour les fonctions à effectuer par les différents éléments mobiles ; un moyen électronique, approprié pour programmer les différentes unités ; une installation de lubrification sous pression ; et un moyen de sécurité pour la protection contre les accidents.

2. Système selon la revendication 1, dans lequel ladite aiguille spéciale utilisée pour amener et distribuer ledit fil électriquement conducteur, comprend :
un chas d'aiguille (5), qui est agencé avec l'axe horizontal, qui distribue le fil électriquement conducteur (8) ;
une tige creuse (9), supportant ledit chas d'aiguille (5) ; et disposée avec son axe s'étendant verticalement ;
un enrouleur de fil (44), approprié pour compenser la quantité variable de longueur de fil nécessaire par unité de temps, pendant l'étape d'enroulement, et qui est agencé au niveau de l'extrémité inférieure de ladite tige creuse (9) ; et
des douilles de guidage (45) pour le fil (8), montées à l'intérieur de ladite tige creuse (9).

3. Système selon la revendication 2, dans lequel deux mouvements sont communiqués à la tige (9) supportant le chas d'aiguille (5), qui sont un mouvement de va-et-vient dans la direction verticale (F4) et un mouvement de va-et-vient rotatif, ou d'entraînement (F5).

4. Système selon les revendications 2 et 3, dans lequel lesdits mouvements de va-et-vient vertical et rotatif, communiqués à ladite tige creuse (9), sont obtenus en utilisant des ensembles mécaniques.

5. Système selon la revendication 2, dans lequel ledit chas d'aiguille (5) a les particularités suivantes :
il a une forme et une taille appropriées pour être inséré entre les pôles du stator à munir des enroulements ;
il a un trou intérieur, de sorte que :
- sa section transversale est variable dans toutes les directions ;
- il a une taille qui est adaptée à la taille d'un fil à enrouler ;
- il est arrondi au niveau de la partie d'entrée du fil, en correspondance au diamètre du fil ;
- il est arrondi autant que possible au niveau de la partie de sortie du fil.

6. Système selon la revendication 1, dans lequel lesdites stratifications de noyau ferromagnétiques qui forment le stator devant subir une opération d'enroulement, sont munies, au niveau de l'extrémité intérieure des pièces polaires, de sièges ou de parties en retrait (10) recevant des dents respectives (11) formées sur les parties formant têtes (12 et 13), afin de retenir lesdites parties formant têtes, en maintenant leur orientation par rapport aux pièces polaires du stator.

7. Système selon la revendication 1, dans lequel il y a deux desdites parties formant têtes, qui sont une supérieure (12) et une inférieure (13), qui sont appropriées pour être insérées et retenues au niveau des deux extrémités respectives du stator (14) devant subir l'opération d'enroulement, afin d'obtenir un enroulement sans croisements.

8. Système selon la revendication 7, dans lequel la tête supérieure (12) est **caractérisée par** :
- une structure annulaire avec des dimensions adaptées à la taille du stator sur lequel elle sera insérée ;
- ladite structure annulaire étant extérieurement circulaire et polygonale à l'intérieur, et comprenant un certain nombre de côtés correspondant au nombre de pièces polaires du stator ;
- des bras intérieurs (15), dont le nombre correspond au nombre de pièces polaires du stator, s'étendant à partir du centre de chaque côté de polygone et avançant vers le centre, et se conformant sensiblement, en ce qui concerne leurs taille et forme, à la taille et à la forme desdites pièces polaires ;
- plusieurs dents (11) obtenues et agencées sur la partie inférieure et l'extrémité intérieure desdits bras (15), ayant une taille et une forme appropriées pour leur insertion à l'intérieur des sièges (10) formés sur les stratifications de noyau ferromagnétiques qui composent le stator ;
- plusieurs ailettes saillantes (18), agencées sur la circonférence, sur le même côté où les dents (11) sont formées, lesdites ailettes étant aptes à être alignées et introduites dans une extrémité du bloc laminaire (14) constituant le stator devant subir l'opération d'enroulement, et entrant en contact, avec un petit jeu, avec le diamètre extérieur "De" des fentes (19) séparant les pièces polaires (20) les unes des autres ;
- une rainure (22), formée sur chaque côté du polygone, près du point où chaque bras (15) est inséré et apte à recevoir le fil électriquement conducteur ;
- plusieurs ailettes (23), avançant depuis le côté opposé par rapport aux ailettes d'alignement (18), et dont le nombre, la taille et les positions, sont appropriés pour permettre l'accrochage du fil conducteur (8) dans la position de départ (25) de l'enroulement, et pour retenir le fil dans une position correcte, tandis que ce dernier est déplacé le long d'un chemin en zigzag, d'un pôle au pôle suivant de chaque spire de bobine.

9. Système selon les revendications 7 et 8, dans lequel la partie formant tête inférieure (13) diffère de la partie formant tête supérieure (12), en ce qu'elle ne comprend pas d'ailettes d'accrochage de fil (23) et de rainures (22).

10. Système selon les revendications 7, 8, 9, dans lequel la forme, l'espace et la dimension des sièges dans lesquels les spires de bobine sont reçues, sont tels qu'un nombre entier de spires de bobine peut être compris dans chaque couche, et chaque couche peut chevaucher les autres avec un agencement en quinconce des spires les unes par rapport aux autres.

11. Système selon les. revendications 7, 8, 9, dans lequel les parties formant têtes supérieure et inférieure (12, 13) peuvent être réalisées en utilisant une matière non magnétique, de préférence une matière électriquement isolante, comme des matières thermoplastiques ou thermodurcissables.

12. Système selon la revendication 1, dans lequel l'opération d'enroulement n'est pas effectuée directement sur le bloc formant stratifications ferromagnétiques qui forme un stator classique, mais directement sur les bras (15) desdites parties formant têtes supérieure et inférieure (12, 13), après leur insertion sur le bloc laminaire, définissant un ensemble qui forme le stator réel sur lequel l'opération d'enroulement est effectuée.

13. Système selon la revendication 1, dans lequel lesdites unités commandées sont aptes à diriger des ensembles mécaniques respectifs, qui actionnent et déplacent les différents éléments de la machine d'enroulement, qui sont appropriées pour effectuer automatiquement l'opération d'enroulement conformément aux programmes d'enroulement prédéterminés.

14. Système selon la revendication 13, dans lequel le logiciel pour programmer les unités commandées est consacré au but de la présente machine d'enroulement.

15. Système selon la revendication 1, dans lequel les différents ensembles mécaniques sont utilisés pour motoriser les dispositifs employés pour amener et distribuer le fil électriquement conducteur et pour effectuer l'opération d'enroulement.

16. Système selon la revendication 1, dans lequel ledit ensemble mécanique, commandé par l'unité H, communique à une fourchette (42) agencée avec un axe vertical, un mouvement de va-et-vient vertical (F2) et un mouvement de va-et-vient rotatif (F8).

17. Système selon la revendication 16, dans lequel ladite fourchette (42) peut mettre en prise le fil électriquement conducteur (8), et en combinaison avec d'autres unités commandées, elle est appropriée pour guider le fil le long d'un chemin en zigzag, pendant son passage de l'extérieur à l'intérieur des fentes de stator et vice versa, et pendant son accrochage au début et à la fin de l'opération d'enroulement.

18. Système selon la revendication 1, dans lequel ledit dispositif de mise en tension du fil électriquement conducteur comprend des éléments modulaires (48), chacun comprenant deux petits disques (49, 50) se faisant face, l'un d'entre eux étant aligné et en contact avec ledit fil conducteur (8), et l'autre étant mobile de façon axiale et sollicité grâce à un ressort mécanique ou pneumatique, afin d'agir sur le fil conducteur par une force de friction pendant son passage entre les petits disques.

19. Système selon la revendication 18, dans lequel les éléments modulaires (48) sont assemblés selon des inclinaisons différentes.

20. Système selon la revendication 1, dans lequel ladite plaque de service, portant une ou plusieurs palettes de support de stator, peut être manuellement insérée ou extraite par l'opérateur à partir de sa position d'utilisation, ou peut être automatiquement manipulée par un dispositif de chargement / déchargement.

21. Système selon la revendication 1, dans lequel les mouvements du dispositif (41, 58) permettant de verrouiller et de déverrouiller, sur ou des mandrins, lesdites palettes de support de stator, sont synchronisés avec les mouvements des unités électroniquement commandées.

22. Système selon la revendication 1, dans lequel l'intervention des dispositifs automatiques d'ancrage et de coupe du fil, fonctionnant à la fin de l'opération d'enroulement, est synchronisée avec les mouvements des unités électroniquement commandées.
